(19) Europäisches Patentamt
European Patent Office
Office européen des brevets

(11) **EP 3 625 687 B1**

(12) **EUROPEAN PATENT SPECIFICATION**

(45) Date of publication and mention
of the grant of the patent:
**27.10.2021 Bulletin 2021/43**

(51) Int Cl.:
**G06F 12/0868** (2016.01)   **G06F 21/62** (2013.01)

(21) Application number: **18702001.1**

(22) Date of filing: **10.01.2018**

(86) International application number:
**PCT/US2018/013115**

(87) International publication number:
**WO 2018/212797 (22.11.2018 Gazette 2018/47)**

(54) **EFFICIENT OBLIVIOUS CLOUD STORAGE**

EFFIZIENTER VERNACHLÄSSIGBARER CLOUD-SPEICHER

MÉMORISATION EN NUAGE INCONSCIENTE EFFICACE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.05.2017 US 201762508523 P**

(43) Date of publication of application:
**25.03.2020 Bulletin 2020/13**

(73) Proprietor: **Google LLC**
**Mountain View, CA 94043 (US)**

(72) Inventors:
 • **YEO, Kevin**
  **Mountain View, CA 94043 (US)**
 • **PATEL, Sarvar**
  **Mountain View, CA 94043 (US)**
 • **PERSIANO, Giuseppe**
  **Mountain View, CA 94043 (US)**

(74) Representative: **Betten & Resch**
**Patent- und Rechtsanwälte PartGmbB**
**Maximiliansplatz 14**
**80333 München (DE)**

(56) References cited:
 **US-A- 5 123 045     US-A1- 2014 007 250**
 **US-B1- 9 164 702**

 • **Dan Boneh ET AL: "Remote Oblivious Storage: Making Oblivious RAM Practical", , 30 March 2011 (2011-03-30), XP055461454, Retrieved from the Internet: URL:https://dspace.mit.edu/bitstream/handl e/1721.1/62006/MIT-CSAIL-TR-2011-018.pdf [retrieved on 2018-03-21]**
 • **ZAHUR SAMEE ET AL: "Revisiting Square-Root ORAM: Efficient Random Access in Multi-party Computation", 2016 IEEE SYMPOSIUM ON SECURITY AND PRIVACY (SP), IEEE, 22 May 2016 (2016-05-22), pages 218-234, XP032945701, DOI: 10.1109/SP.2016.21 [retrieved on 2016-08-16]**

## Description

TECHNICAL FIELD

This disclosure relates to obliviously moving data blocks stored on memory.

BACKGROUND

Enterprises and individuals are using distributed storage systems (i.e., cloud storage services) to store data on memory overlying multiple memory locations. Many of these enterprises and individuals encrypt their data before uploading onto distributed storage system. In order to use essential functionalities offered by the cloud storage services, such as performing search queries on stored data, enterprises are required to provide plaintext access to the cloud storage services. As a result, many government and sensitive private sectors, such as health, finance, and legal, or reluctant to use cloud storage services, despite their increased convenience and cost advantages. Additionally, encryption alone may not suffice for ensuring data privacy, as the mere knowledge of data access patterns can provide a significant amount of information about the data without ever needing to decrypt the data.

US 2014/0007250 A1 relates to methods and systems of concealing access patterns to data storage, such as within servers of a cloud computing environment. Server data storage is securely partitioned into smaller electronic data storage partitions of predetermined size. Concealment is performed with respect to accesses from the client to server using an oblivious sorting protocol. Access operation is concealed with each block being randomly assigned to any of the data storage partitions, and whenever a block is accessed, the block is logically removed from its current partition and logically assigned to a fresh random partition selected from all partitions, while the client maintains tracking of which partition each block is associated with at any point of time.

SUMMARY

The invention is defined in the appended claims. The dependent claims set out particular embodiments. One aspect of the disclosure provides a method according to claim 1.

Implementations of the disclosure may include one or more of the following optional features. In some implementations, for each memory level ($l_i$), the physical memory ($RAM_i$) has a defined first size to hold $N_i$ data blocks ($B$) and the virtual memory ($Shelter_i$) has a defined second size to hold $S_i$ data blocks ($B$), wherein $S_i = {}^{N_i}/_c$ and c is a constant greater than one. The corresponding dummy data block ($D_j$) of the respective memory level ($l_j$) includes a permutation ($\pi_j$) of a pointer ($dCnt_j$) to a respective data block ($N_j$) at the respective memory level ($l_j$). The method may also include incrementing, by the data processing hardware, the pointer ($dCnt_j$).

In some examples, when the memory level ($l_q$) is not the lowest memory level ($l_l$), the method includes updating, by the data processing hardware, the level map to indicate that the retrieved data block is stored in the virtual memory ($Shelter_l$) of the lowest memory level ($l_l$). The distributed system may be configured to initialize at least one data block ($N_i$) of the corresponding virtual memory ($Shelter_i$) of at least one memory level ($l_i$) as a respective dummy data block ($D_i$). The respective dummy data block ($D_i$) may include a permutation of a size of the corresponding data block ($N_i$), an index of the corresponding data block ($N_i$), or a memory level number of the corresponding memory level ($l_i$).

In some implementations, the method includes obliviously shuffling, by the data processing hardware, the corresponding virtual memory ($Shelter_i$) of each memory level ($l_i$). The method may also include obliviously shuffling, by the data processing hardware, the virtual memory ($Shelter_l$) of the lowest memory level ($l_l$) with the virtual memory ($Shelter_{l\_1}$) of a next memory level ($l_i$) greater than the lowest memory level ($l_l$). Obliviously shuffling may further include: selecting a random permutation on the data blocks ($B$) from the virtual memory ($Shelter_l$), ($Shelter_{l\_1}$); decrypting each of the data blocks ($B$) from the virtual memory ($Shelter_l$), ($Shelter_{l\_1}$); re-encrypting each of the data blocks ($B$) from the virtual memory ($Shelter_l$), ($Shelter_{l\_1}$); and shuffling the re-encrypted data blocks ($B$) using the random permutation on the re-encrypted data blocks ($B$).

Another aspect of the disclosure provides a client device according to claim 8.

This aspect may include one or more of the following optional features. In some implementations, for each memory level ($l_i$), the physical memory ($RAM_i$) has a defined first size to hold $N_i$ data blocks ($B$) and the virtual memory ($Shelter_i$) has a defined second size to hold $S_i$ data blocks ($B$), wherein $S_i = {}^{N_i}/_c$ and c is a constant greater than one. The corresponding dummy data block ($D_j$) of the respective memory level ($l_j$) may include a permutation ($\pi_j$) of a pointer ($dCnt_j$) to a respective data block ($N_j$) at the respective memory level ($l_j$). The operations may also include incrementing the pointer ($dCnt_j$).

When the memory level ($l_q$) is not the lowest memory level ($l_l$), the operations may include updating the level map to indicate that the retrieved data block is stored in the virtual memory ($Shelter_l$) of the lowest memory level ($l_l$). The distributed system may be configured to initialize at least one data block ($N_i$) of the corresponding virtual memory ($Shelter_i$) of at least one memory level ($l_i$) as a respective dummy data block ($D_i$). The respective dummy block may include a permutation of a size of the corresponding data block ($N_i$), an index of the corresponding data block ($N_i$), or a memory level number of the corresponding memory level ($l_i$).

In some examples, the operations include obliviously shuffling the corresponding virtual memory ($Shelter_i$) of each memory level ($l_i$). The operations may

also include obliviously shuffling the virtual memory ($Shelter_i$) of the lowest memory level ($l_i$) with the virtual memory ($Shelter_{i-1}$) of a next memory level ($l_i$) greater than the lowest memory level ($l_i$). Obliviously shuffling may further include: selecting a random permutation for the data blocks (B) from the virtual memory ($Shelter_i$), ($Shelter_{i-1}$); decrypting each of the data blocks (B) from the virtual memory ($Shelter_i$), ($Shelter_{i-1}$); re-encrypting each of the data blocks (B) from the virtual memory ($Shelter_i$), ($Shelter_{i-1}$); and shuffling the re-encrypted data blocks (B) using the random permutation on the re-encrypted data blocks (B).

The details of one or more implementations of the disclosure are set forth in the accompanying drawings and the description below. Other aspects, features, and advantages will be apparent from the description and drawings, and from the claims.

DESCRIPTION OF DRAWINGS

FIG. 1 is a schematic view of an example system for obliviously executing queries for data blocks stored on non-transitory data storage of a distributed system.

FIG. 1B is a schematic view of an example system for allowing one or more clients to obliviously execute queries for data blocks stored on non-transitory data storage of a distributed storage system.

FIG. 2 provides a schematic view of example memory levels including two levels of non-transitory memory.

FIG. 3 provides a schematic view of an example memory-level map for mapping memory levels of non-transitory memory.

FIGS. 4A and 4B provide an example instruction executing on a client device to execute a query for a data block.

FIG. 5 provides an example algorithm for initializing memory levels of non-transitory memory.

FIG. 6 provides an example algorithm for execution of an instruction at a client device to execute a query for a data block

FIGS. 7A and 7B illustrate a method for obliviously executing queries for data blocks.

FIG. 8 is a schematic view of an example computing device executing a query for a data block.

Like reference symbols and the various drawings indicate like elements.

DETAILED DESCRIPTION

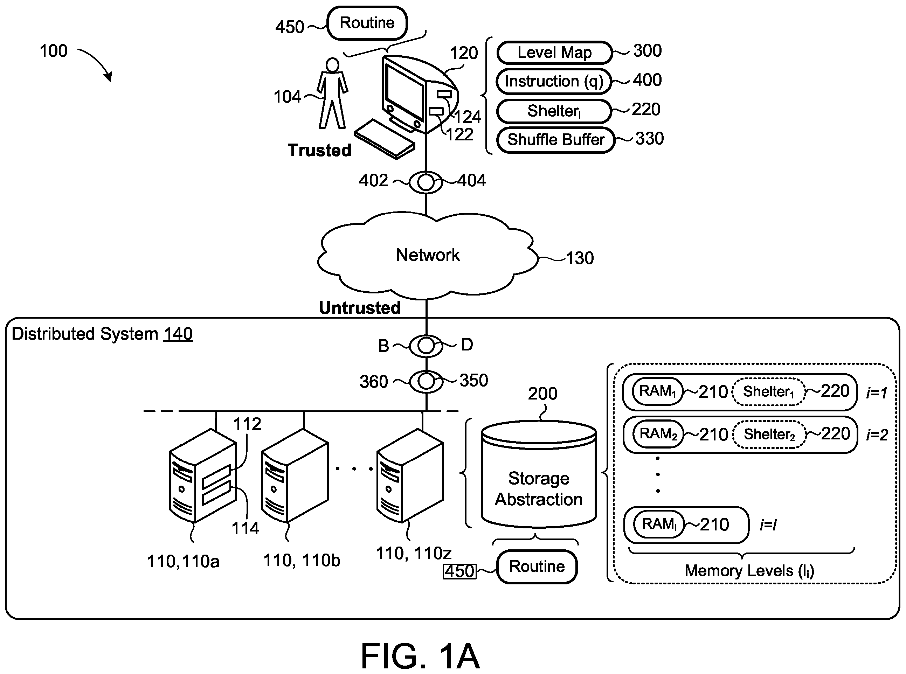

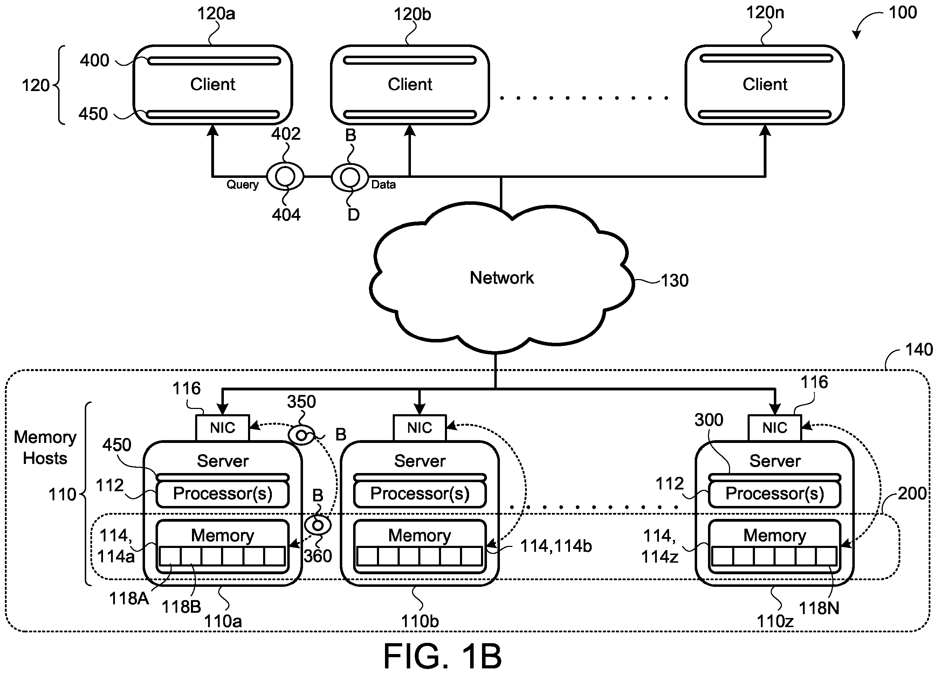

FIGS. 1A and 1B depict an example system 100 for storing N data blocks (B) owned by a client 104 on a distributed system 140 and obliviously moving the data blocks (B) around the distributed system 140 to conceal access patterns while preserving search functionalities on the data blocks by the client 104. A client device 120 (e.g., a computer) associated with the client 104 communicates, via a network 130, with the distributed system 140 having a scalable/elastic non-transitory storage abstraction 200. The client device 120 may include associated memory hardware 122 and associated data processing hardware 124. The storage abstraction 200 (e.g., key/value store, file system, data store, etc.) is overlain on storage resources 114 to allow scalable use of the storage resources 114 by one or more client devices 120.

In some implementations, the distributed system 140 executes a computing device 112 that manages access to the storage abstraction 200. For instance, the client device 120 may encrypt and store the data blocks (B) on the storage abstraction 200, as well as retrieve and decrypt the data blocks (B) from the storage abstraction 200. While the example shown depicts the system 100 having a trusted side associated with the client device 120 in communication, via the network 130, with an untrusted side associated with the distributed system 140, the system 100 may be alternatively implemented on a large intranet having a trusted computing device(s) (CPU) and untrusted data storage.

In some implementations, the distributed system 100 includes resources 110, 110a—z. The resources 110 may include hardware resources 110 and software resources 110. The hardware resources 110 may include computing devices 112 (also referred to as data processing devices and data processing hardware) or non-transitory memory 114 (also referred to as memory hardware and storage resources). The software resources 110 may include software applications, software services, application programming interfaces (APIs) or the like. The software resources 110 may reside in the hardware resources 110. For example, the software resources 110 may be stored in the memory hardware 114 or the hardware resources 110 (e.g., the computing devices 112) may be executing the software resources 110.

A software application (i.e., a software resource 110) may refer to computer software that causes a computing device to perform a task. In some examples, a software application may be referred to as an "application," an "app," or a "program." Example applications include, but are not limited to, system diagnostic applications, system management applications, system maintenance applications, word processing applications, spreadsheet applications, messaging applications, media streaming applications, social networking applications, and gaming applications.

The memory hardware 114, 122 may be physical devices used to store programs (e.g., sequences of instructions) or data (e.g., program state information) on a temporary or permanent basis for use by a computing device 112 and/or a client device 120 (i.e., the data processing hardware 124 of the client device 120). The memory hardware 114, 122 may be volatile and/or non-volatile addressable semiconductor memory. Examples of non-volatile memory include, but are not limited to, flash memory and read-only memory (ROM) / programmable read-only memory (PROM) / erasable programmable read-only memory (EPROM) / electronically erasable programmable read-only memory (EEPROM) (e.g., typically used for firmware, such as boot programs). Examples of volatile memory include, but are not limited to, random access memory (RAM), oblivious random access memory (ORAM), dynamic random access memory (DRAM), static random access memory (SRAM), phase change memory (PCM) as well as disks or tapes.

The network 130 may include various types of networks, such as local area network (LAN), wide area network (WAN), and/or the Internet. Although the network 130 may represent a long range network (e.g., Internet or WAN), in some implementations, the network 130 includes a shorter range network, such as a local area network (LAN). In some implementations, the network 130 uses standard communications technologies and/or protocols. Thus, the network 130 can include links using technologies, such as Ethernet, Wireless Fidelity (WiFi) (e.g., 802.11), worldwide interoperability for microwave access (WiMAX), 3G, Long Term Evolution (LTE), digital subscriber line (DSL), asynchronous transfer mode (ATM), InfiniBand, PCI Express Advanced Switching, Bluetooth, Bluetooth Low Energy (BLE), etc. Similarly, the networking protocols used on the network 130 can include multiprotocol label switching (MPLS), the transmission control protocol/Internet protocol (TCP/IP), the User Datagram Protocol (UDP), the hypertext transport protocol (HTTP), the simple mail transfer protocol (SMTP), the file transfer protocol (FTP), etc. The data exchanged over the network 130 can be represented using technologies and/or formats including the hypertext markup language (HTML), the extensible markup language (XML), etc. In addition, all or some of the links can be encrypted using conventional encryption technologies, such as secure sockets layer (SSL), transport layer security (TLS), virtual private networks (VPNs), Internet Protocol security (IPsec), etc. In other examples, the network 130 uses custom and/or dedicated data communications technologies instead of, or in addition to, the ones described above.

The data blocks (B) correspond to atomic units of data and each have size B bytes each. For example, a typical value for B for storage on a distributed system may be 64 KB to 256B. A notation N denotes a total number of the data blocks (B) associated with the client 104 and stored on the storage abstraction 200 using Oblivious Random Access Memory (O-RAM). Each of the N data blocks is stored at a corresponding memory location 118, 118A-N (FIG. 1B) of the storage abstraction 200 overlain across the memory hardware 114.

**While** traditional encryption schemes provide confidentiality, the traditional encryption schemes are ineffective at hiding data access patterns which may reveal very sensitive information to the untrusted distributed system 140. Moreover, the traditional encryption schemes allow the client 104 to search for encrypted data (represented by data blocks (B, $B_1$—$B_N$) stored on the distributed system 140 only if the client 104 provides plain text access for the data to the distributed system 140. As the client device 120 originates the data, the client device 120 is considered trusted.

In some implementations, the client device 120 and the distributed system 140 execute an oblivious permutation routine 450 for obliviously moving the encrypted data blocks (B) around the storage abstraction 200 to completely hide data access patterns (which data blocks (B) were read/written) from the distributed system 140. For instance, the oblivious permutation routine 450 may cause the distributed system 140 to allocate new memory locations 118 of the storage abstraction 200 for storing re-permutated data blocks (B) and organize/divide/partition the storage abstraction 200 into multiple data buckets 350. In some implementations, the oblivious permutation routine 450 organizes the storage abstraction 200 into n data buckets 350 each containing n data blocks (B), whereby the value n is equal to the square root of the N data blocks (i.e., $n = \sqrt{N}$). At the trusted side, the client device 120 may iteratively download each of the n data buckets 350 one at a time from the distributed system 140 and allocates substantially n cache slots on the memory hardware 122 while executing the oblivious permutation routine 450. For each data bucket 350 received, the client device 120 applies a random permutation on the n data blocks (B) within the corresponding data bucket 350 to generate permutated data blocks and determines a corresponding buffer bucket 360 and a corresponding cache slot for each permutated data block (B). Here, the cache slots may temporarily store the recently permutated data blocks (B) at the memory hardware 122 of the client device 120 until the data blocks (B) are uploaded/sent to the distributed system 140 for storage at the new memory locations 118. Additional details executing the oblivious permutation routine for obliviously moving the encrypted data blocks (B) around the storage abstraction 200 can be found in U.S. Patent Application 62/490,804, filed on April 27, 2017.

In some implementations, when the client device 120 needs to access (read/write) an encrypted data block (B) stored on the storage abstraction 200, the data processing hardware 124 at the client device 120 executes an instruction 400 to execute a query (q) for the data block (B). By executing the instruction 400, the client device 120 is able to retrieve the data block (B) without revealing the contents of the data block (B) as well as the sequence of the query (q) executed by the client device 120 to the distributed system 140. Further, execution of the instruction 400 completely hides data access patterns (which data blocks (B) were read/written) from the distributed system 140. Execution of the instruction 400 only requires a single roundtrip between the client device 120 and the distributed system 140 when the client device 120 executes the corresponding query (q) for the data block (B). For instance, all operations that require writing back to the server are sent with the query. Similarly, all read operations can also be sent with the query. All data can also be sent back to the distributed system 140 with the query results.

Referring to FIG. 1B, in some implementations, the distributed storage system 140 includes loosely coupled memory hosts 110, 110a—z (e.g., computers or servers), each having a computing resource 112 (e.g., one or more processors or central processing units (CPUs)) in communication with storage resources 114 (e.g., memory hardware, memory hardware, flash memory, dynamic random access memory (DRAM), phase change memory (PCM), and/or disks) that may be used for caching data. The storage abstraction 200 overlain on the storage resources 114 allows scalable use of the storage resources 114 by one or more client devices 120, 120a-n. The client devices 120 may communicate with the memory hosts 110 through the network 130.

In the invention, the distributed storage system 140 is "single-sided," eliminating the need for any server jobs for responding to real and/or fake queries 402, 404 from client devices 120 to retrieve data blocks (B) and/or dummy blocks (D) from the storage abstraction 200 when the client device executes instructions 400 to execute queries (q) for data blocks (B). "Single-sided" refers to the method by which most of the request processing on the memory hosts 110 may be done in hardware rather than by software executed on CPUs 112 of the memory hosts 110. Additional concepts and features related to a single-sided distributed caching system can be found in U.S. Patent 9,164,702.

The distributed system 140 may obliviously move data blocks (B) around the storage resources 114 (e.g., memory hardware) of the remote memory hosts 110 (e.g., the storage abstraction 200) and get the data blocks (B) from the remote memory hosts 110 via remote direct memory access (RDMA)-capable network interface controllers (NIC) 116. A network interface controller 116 (also known as a network interface card, network adapter, or LAN adapter) may be a computer hardware component that connects a computing device/resource 112 to the network 130. Both the memory hosts 110a—z and the client device 120 may each have a network interface controller 116 for network communications. The oblivious permutation routine 450 executing on the physical processor 112 of the hardware resource 110 registers a set of remote direct memory accessible regions/locations 118A-N of the memory 114 with the network interface controller 116. Each memory location 118 is configured to store a corresponding data block (B).

In some implementations, when the client device 120 executes the instruction 400 to execute the query (q) for a data block (B) and determines that the data block (B) is stored locally at the memory hardware 122 of the client device 120, the client device 120 retrieves the data block (B) from the memory hardware 122 and sends one or more fake queries 404 to the NIC 116 for retrieving corresponding dummy blocks (D) to conceal the retrieval of the data block (B) from the local memory hardware 122. The client device 120 may discard each retrieved dummy block (D). On the other hand, if the client device 120 determines that the data block (B) is stored on the storage abstraction 200, the client device 120 may send a real query 402 to the NIC 116 for retrieving the corresponding data block (D) from the storage abstraction 200.

The client device 120 stores a memory-level map 300 locally in the memory hardware 122 that maps memory levels ($l_i$) of memory 118, 122, 200. The sizes and number of memory levels ($l_i$) may be selected based on query and shuffling costs, in addition to the amount of storage capacity required at each of the client device 120 and the storage abstraction 200. Each memory level ($l_i$) includes physical memory ($RAM_i$) 210 and virtual memory ($Shelter_i$) 220. As shown in FIG. 1A, the virtual memory ($Shelter_l$) 220 of a lowest memory level ($l_l$) resides on the client device 120 (i.e., within the memory hardware 122), while the remaining physical memory ($RAM_i$) 210 and virtual memory ($Shelter_i$) 220 resides on the storage abstraction 200 (e.g., memory hardware 114) of the distributed system 140.

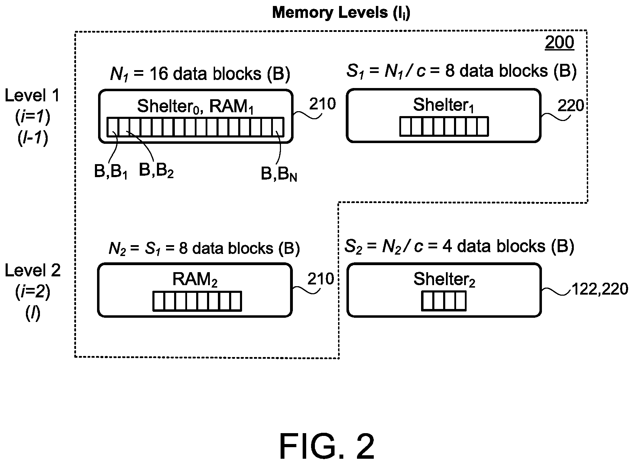

FIG. 2 provides a schematic view of example memory levels ($l_i$) including two levels of memory 122, 200. The two levels may be extended to log N levels yielding a slowdown of $O(log N)$ and client storage $O(N/B)$ for a RAM capacity of N data blocks (B) of size B. The first level (Level 1) ($i=1$) includes physical memory ($RAM_1$) 210 and virtual memory ($Shelter_1$) 220. In the example shown, the physical memory ($RAM_1$) 210 of the first level (Level 1) may correspond to virtual memory ($Shelter_0$) that initially stores all of the N data blocks (B). The physical memory ($RAM_1$) 210 and virtual memory ($Shelter_0$, $Shelter_1$) 220 each reside on the storage abstraction 200 of the distributed system 140. The $RAMi$ includes a size of $Ni$ data blocks (B) and the $Shelter_1$ includes a size of $Si$ data blocks (B), whereby the $S_1$ is equal to the value of $Ni$ divided by a constant c (i.e., $S_1 = N_1 / c$). The constant c may be any value greater than one (1) so that the size/capacity of $Si$ data blocks (B) associated with $Shelter_1$ decreases from the size/capacity of $Ni$ data blocks (B) stored in the $RAMi$. In the example shown, the value for $N_1$ is equal to 16 data blocks (B), ($B_1$—$B_N$) stored in $RAMi$ and the constant c is equal to two (2). Accordingly, the virtual memory ($Shelter_1$) 220 of the first level (Level 1) includes a value of $Si$ equal to eight (8) data blocks (B).

The second level (Level 2), ($i=2$) includes physical memory ($RAM_2$) 210 and virtual memory ($Shelter_2$) 200. As the memory levels ($l_i$) include two levels, the second level (Level 2) corresponds to a lowest memory level ($l_l$), and therefore, the physical memory ($RAM_2$) 210 resides on the storage abstraction 200 and the virtual memory ($Shelter_2$) 220 resides on the memory hardware 122 at the client device 120. The $RAM_2$ includes a size of $N_2$

data blocks (B) and the *Shelter₂* includes a size of $S_2$ data blocks (B), whereby the value of $N_2$ is equal to the value of $S_i$ associated with *Shelter₁* of the first level (*l-1*). Thus, *Shelter₁* of the first level may correspond to new data blocks (B) stored in the $RAM_2$ at the second level of size $N_2=S_1$ (e.g., $N_2$= eight (8) data blocks (B)). Additionally, the value for $S_2$ of the *Shelter₂* is equal to the value of $N_2$ divided by the constant c (i.e., $S_2 = N_2 / c$). In the example shown, the value for $N_2$ is equal to 8 data blocks (B) stored in *RAMi* and the constant c is equal to two (2). Accordingly, the virtual memory (*Shelter₁*) 220 of the lowest level (*l₁*) residing on the memory hardware 122 of the client device 120 includes a value for $S_2$ equal to four (4) data blocks (B).

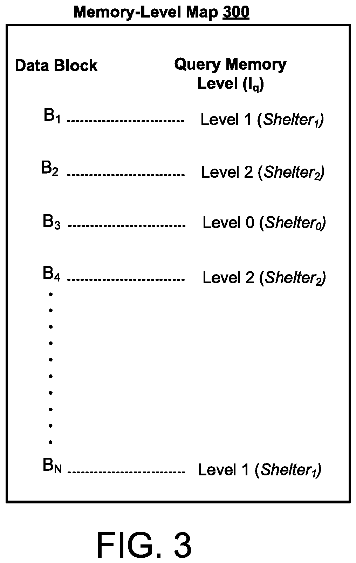

FIG. 3 provides a schematic view of an example memory-level map 300 residing at the client device 120 for mapping the memory levels (*lᵢ*) of the memory 122, 200. In the example shown, the example memory-level map 300 maps the two memory levels (*lᵢ*) of FIG. 2. The memory-level map 300 maps each data block (B), ($B_1$—$B_N$) to a corresponding query memory level (*lq*) associated with a lowest one of the memory levels (*lᵢ*) at which the corresponding data block (B) of the executed query (q) is stored. For instance, data blocks ($B_1$, $B_N$) each include a corresponding query memory level (*lq*) equal to Level 1 indicating that the data blocks ($B_1$, $B_N$) are stored in *Shelter₁*. Thus, if the client device 120 executes a query (q) for either of the data blocks ($B_1$, $B_N$), the client device 120 will send a real query 402 to $RAM_2$, which corresponds to *Shelter₁*, residing at the storage abstraction 200 to retrieve the requested data blocks ($B_1$, $B_N$). Data block ($B_3$) includes a corresponding query memory level (*lq*) equal to Level 0 indicating that the data block ($B_3$) is stored in Shelter0 corresponding to *RAMi.* Thus, if the client device 120 executes a query (q) for the data blocks ($B_3$), the client device 120 will send a real query 402 to *RAMi* residing at the storage abstraction 200 to retrieve the requested data blocks ($B_3$).

In some implementations, when query memory level (*lq*) is not the lowest memory level (*lₗ*) (i.e., $lq \neq l_l$), the client device 120 updates the memory-level map 300 to indicate that the retrieved data block (B) is now stored at the client device 120 in the virtual memory (*Shelterₗ*) of the lowest memory level (*lₗ*). In the example shown, when the client device 120 retrieves a data block (B) from the storage abstraction 200 (e.g., $RAM_1$ or $RAM_2$) having a corresponding query memory level (*lq*) less than the lowest memory level (*lₗ*), the client device 120 stores the retrieved data block (B) locally in the *Shelter₂* of the memory hardware 122 and updates the level map 300 to indicate that the retrieved data block (B) now includes a corresponding query memory level (*lq*) equal to Level 2, i.e., the lowest memory level (*lₗ*).

Referring back to FIG. 1A, the client device 120 may further initialize a shuffle buffer 330 in the local memory hardware 122 for shuffling the virtual memory (*Shelterᵢ*) 220 of the memory levels (*lᵢ*). To avoid overflow in the virtual memory (*Shelterᵢ*) of the lowest memory level (*lₗ*) residing at the client device 120, the shuffle buffer 330 may shuffle *Shelterₗ* with *Shelterₗ₋₁*. *Shelterₗ₋₁* is the shelter of the next highest level from the lowest memory level (*lₗ*), and thus, resides on the storage abstraction 200. Here, the client device 120 may download the data blocks (B) of shelters *Shelterₗ* and *Shelterₗ₋₁* and decrypt/re-encrypt the data blocks (B) before shuffling the re-encrypted data blocks (B) according to a new randomly selected permutation. Thereafter, the client device 120 uploads the re-permutated data blocks (B) into *Shelterₗ₋₁* on the storage abstraction 200.

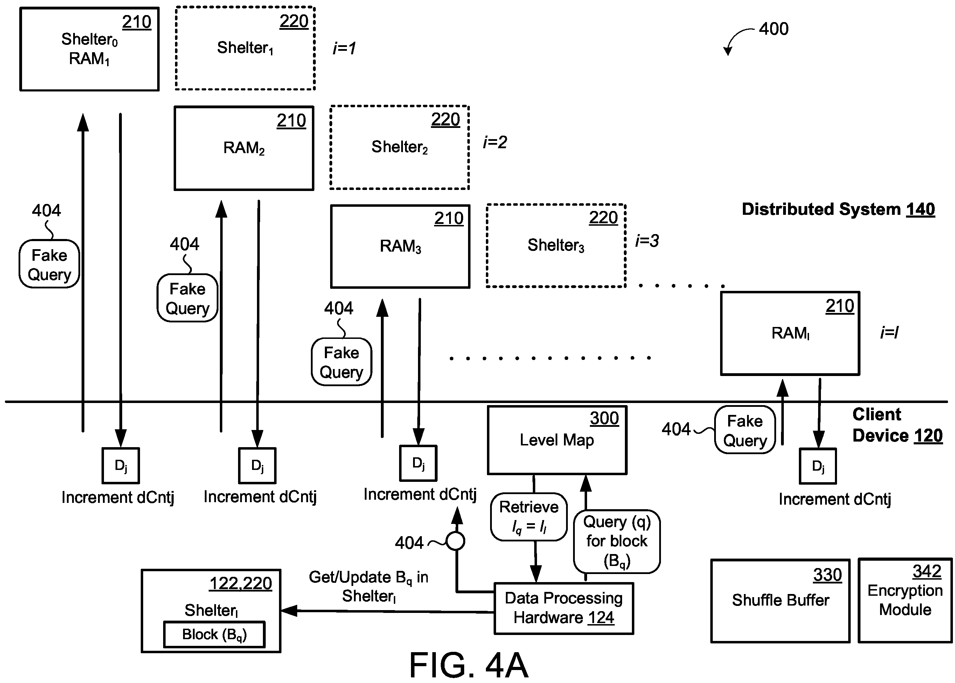

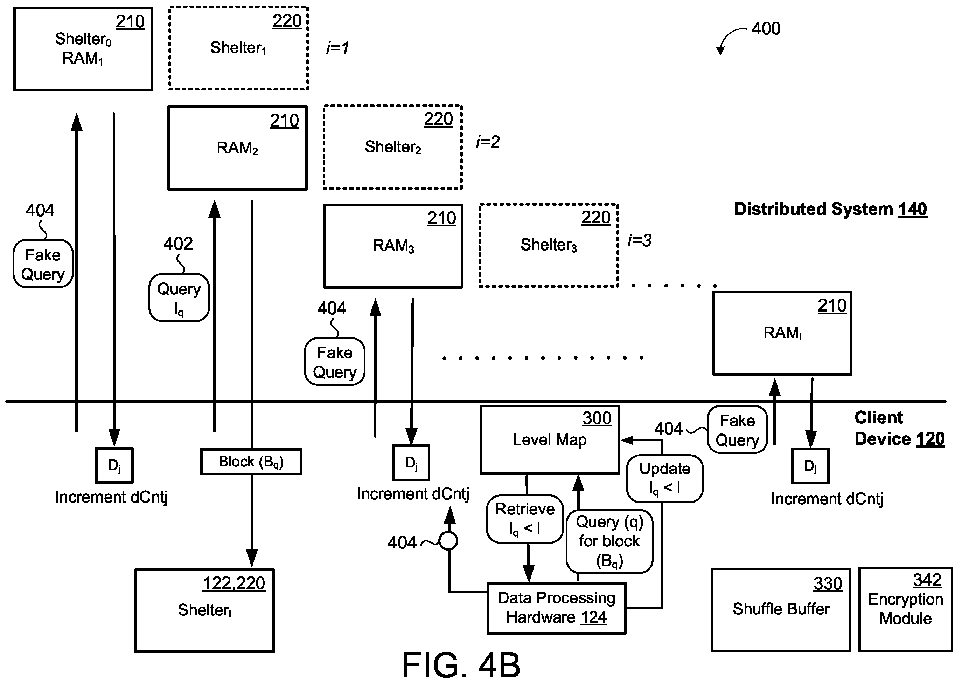

FIGS. 4A and 4B provide an example instruction 400 executing on the client device 120 to execute a query (q) for a data block ($B_q$). The data block ($B_q$) may be stored either at the client device 120 or the storage abstraction 200 using full recursive square root O-RAM. In the example shown, each of the multiple memory levels (*lᵢ*) include physical memory ($RAM_i$) 210 and virtual memory (*Shelterᵢ*) 220, whereby the virtual memory (*Shelterₗ*) 220 of the lowest memory level (*lₗ*) resides on the client device 120 (e.g., in the memory hardware 122) and the remaining physical memory ($RAM_i$) 210 and virtual memory (*Shelterᵢ*) 220 reside on the memory hardware 114 (e.g., storage abstraction 200) of the distributed system 140. Thus, $RAM_1$—$RAM_l$ and *Shelter₀*—*Shelterₗ₋₁* reside on the memory hardware 114 of the distributed system 140 and *Shelterₗ* resides on the client device 120.

In some implementations, the virtual memory (*Shelterₗ*) 220 occupies a space/size on the client device 120 of $S_l$ equal to $O(1)$. Additionally, each physical memory ($RAM_i$) 210 occupies a space/size on the storage abstraction 200 of $N_i$, whereby $N_i$ is equal to the value of $N_i$ divided by the constant c to the power i (i.e., $N_i = N_1 / c^i$). Similarly, each virtual memory (*Shelterᵢ*—*Shelterₗ₋₁*) 220 occupies a space/size on the storage abstraction 200 of $S_i$, whereby $S_i$ is equal to the value of $N_i$ divided by the constant c (i.e., $S_i = N_i / c$).

In some examples, the distributed system 140 is configured to initialize at least one data block ($B_i$) of the corresponding virtual memory (*Shelterᵢ*) of at least one memory level (*lᵢ*) as a respective dummy data block ($D_i$). Here, the respective dummy data block ($D_i$) may include a permutation of a size of the corresponding data block ($B_i$), an index ($N_i$) of the corresponding data block ($B_i$), or a memory level number of the corresponding memory level (*lᵢ*).

FIG. 4A shows the data processing hardware 124 of the client device 120 retrieving a query memory level (*lq*) corresponding to the data block ($B_q$) from the memory-level map 300 when the data processing hardware 124 executes the query (q) for the data block ($B_q$). The data processing hardware 124 determines that the query memory level (*lq*) is the lowest memory level (*lₗ*), ($l_q = l_l$) and subsequently retrieves the data block ($B_q$) from the virtual memory (*Shelterₗ*) 220 of the lowest memory level (*lₗ*) residing on the client device 120. For instance, the data processing hardware may retrieve the data block ($B_q$) to perform a get/read operation or to perform an update/write operation on the data block (Bq). Additionally, for each memory level ($l_j$) greater than the lowest memory level ($l_l$) and the physical memory ($RAM_l$) at the lowest memory level ($l_l$), the data processing hardware 124 sends a corresponding fake query 404 to each respective memory level ($l_j$), ($l_l$) to retrieve a corresponding dummy data block ($D_j$) therefrom. In the example shown, the data processing hardware 124 retrieves the corresponding dummy data block ($D_j$) from each of the $RAM_1$—$RAM_l$. The client device 120 retrieves the dummy data blocks ($D_j$) to obfuscate the retrieval of the data block ($B_q$) from the virtual memory ($Shelter_l$) 220 on the memory hardware 122 at the client device 120. In some examples, the data processing hardware 124 discards the retrieved dummy data blocks ($D_j$).

In some examples, each corresponding dummy data block ($D_j$) of the respective memory level ($l_j$) includes a permutation ($\pi_j$) of a pointer ($dCnt_j$) to a respective data block ($N_j$) at the respective memory level ($l_j$). The data processing hardware 124 may increment the corresponding pointer ($dCnt_j$) when the corresponding dummy block ($D_j$) is retrieved from the respective memory level ($l_j$) to prevent the data processing hardware 124 from retrieving the same dummy block ($D_j$) twice.

FIG. 4B shows the data processing hardware 124 of the client device 120 retrieving a query memory level ($l_q$) corresponding to the data block ($B_q$) from the memory-level map 300 and determining that the retrieved query memory level ($l_q$) is not the lowest memory level ($l_l$), ($l_q < l_l$). Here, the memory-level map 300 indicates that the data block ($B_q$) is not currently stored on the virtual memory ($Shelter_l$) 220 of the lowest memory level ($l_l$) residing on the client device 120. In the example shown, the retrieved query memory level ($l_q$) is equal to level 1 indicating that the corresponding data block ($B_q$) is stored on the physical memory ($RAM_2$) 210 at the storage abstraction 200 of the distributed system 140. Accordingly, data processing hardware 124 sends a real query 402 to the physical memory ($RAM_2$) 210 associated with the query memory level ($lq$) to retrieve the data block (Bq). The data processing hardware 124 stores the retrieved data block ($B_q$) in the virtual memory ($Shelter_l$) 220 of the lowest memory level ($l_l$) residing on the client device 120. Thereafter, the data processing hardware 124 may update the memory-level map 300 to indicate that the retrieved data block ($B_q$) is stored in the virtual memory ($Shelter_l$) 220 of the lowest memory level ($l_l$).

Moreover, for each memory level ($l_j$) other than the query memory level ($l_q$) (e.g., $RAM_2$), the data processing hardware 124 sends a corresponding fake query 404 to each respective memory level ($l_j$) to retrieve a corresponding dummy data block ($D_j$) therefrom. In the example shown, the data processing hardware 124 retrieves the corresponding dummy data block ($D_j$) from each of the $RAM_1$ and $RAM_3$—$RAM_l$. In some examples, the data processing hardware 124 discards the retrieved dummy data blocks ($D_j$). FIG. 4B also shows the data processing hardware 124 incrementing the corresponding pointer ($dCnt_j$) when the corresponding dummy block ($D_j$) is retrieved from the respective memory level ($l_j$) to prevent the data processing hardware 124 from retrieving the same dummy block ($D_j$) twice.

Referring to FIGS. 4A and 4B, in some implementations, the data processing hardware 124 initializes the shuffle buffer 330 to obliviously shuffle a corresponding virtual memory ($Shelter_i$) 220 of each memory level ($l_i$). In order to obliviously shuffle the corresponding virtual memory ($Shelter_i$) 220, the shuffle buffer 330 must also shuffle each of the shelters $Shelter_{i+1}$, $Shelter_{i+2}$, ..., $Shelter_l$. Accordingly, the shuffle buffer 330 initially shuffles $Shelter_{l-1}$ by incorporating $Shelter_l$ into $Shelter_{l-1}$ and shuffling $Shelter_{l-1}$ and $Shelter_l$ together. Here, the client device 120 may download the data blocks (B) of shelters $Shelter_l$ and $Shelter_{l-1}$ and decrypt/re-encrypt the data blocks (B) before shuffling the re-encrypted data blocks (B) according to a new randomly selected permutation. Thereafter, the client device 120 uploads the re-permutated data blocks (B) into $Shelter_{l-1}$ on the storage abstraction 200. Next, to obliviously shuffle $Shelter_{l-2}$, the shuffle buffer 330 incorporates $Shelter_{l-1}$ into $Shelter_{l-2}$ and shuffles $Shelter_{l-2}$ and $Shelter_{l-1}$ together. The shuffle buffer 330 repeats this process until $Shelter_i$ is obliviously shuffled.

Generally, for any $Shelter_i$, an oblivious shuffle must be complete after each $S_i$ queries. Additionally, the last $S_i$ queries must be available to the client in $Shelter_i$. Since a given $Shelter_i$ consists of $Shelter_{i+1}$, ... ,$Shelter_l$, the $S_i$ queries may appear anywhere in $Shelter_i$, ... , $Shelter_l$. In some implementations, the obliviously shuffling of $Shelter_i$ occurs over a period of $S_i/2$ queries and the shuffle buffer 330 stores two shuffle buffers having a size of $S_i/2$ data blocks (B). During a collection phase, the shuffle buffer 330 may just store the queried data block ($B_q$). During a work phase, a constant number of steps of obliviously shuffling will complete with each query, e.g., oblivious shuffling will terminate before all queries $S_i/2$ occur. The obliviously shuffling will occur on data that was recently shuffled by the last instance of obliviously shuffling and the corresponding shuffle buffer 330. For the very first instance of obliviously shuffling, the shuffle buffer 330 may use the original data for $Shelter_0$ and a dummy set of data for all other shelters. After the completion of the obliviously shuffling, $Buffer1_i$ of the shuffle buffer 330 can be emptied to be used again. Simultaneously, the collection phase of a second shuffle occurs and all queries are stored in $Buffer2_i$ as the first shuffle is complete. Accordingly, the shuffled data from the first shuffle is available during the work phase of the second shuffle. This pattern may repeat as more queries arrive.

In some examples, the shuffle buffer 330 contains multiple versions of the same data block (B). For instance, the client device 120 can query the same data block ($B_q$) multiple times. However, the shuffle buffer 330 may require at most one updated version of each data block (B). To resolve the issue of multiple versions of the same data, older data block accesses may be denoted as dummy data blocks and may be discarded. However, no data blocks (B) are ever discarded from $Shelter_0$.

In some examples, the total cost of shuffling is calculated as follows.

$$l \cdot N_2 + \sum_{i=1}^{l} \frac{N_2}{N_{i+1}} 5N_i \qquad (1)$$

An amortized cost may be calculated by dividing the total cost by $N_2$ as follows.

$$l + \sum_{i=1}^{l} 5 \frac{N_i}{N_{i+1}} \qquad (2)$$

As shown in FIGS. 4A and 4B, the client device 120 may execute an encryption module 342 or access the encryption module 342 to randomly select an Advanced Encryption Standard (AES) key for use in applying the random permutation on the data blocks (B) as well as encrypting, decrypting, and re-encrypting the data blocks (B). Accordingly, the encryption module 342 may provide a randomly generated key (e.g., an AES key) for obliviously moving the data blocks (B) to new memory locations 118 of the storage abstraction 200 without revealing the permutation to the distributed system 140. In some examples, the randomly generated key is temporary and new keys are randomly generated each time the data blocks (B) are re-permutated.

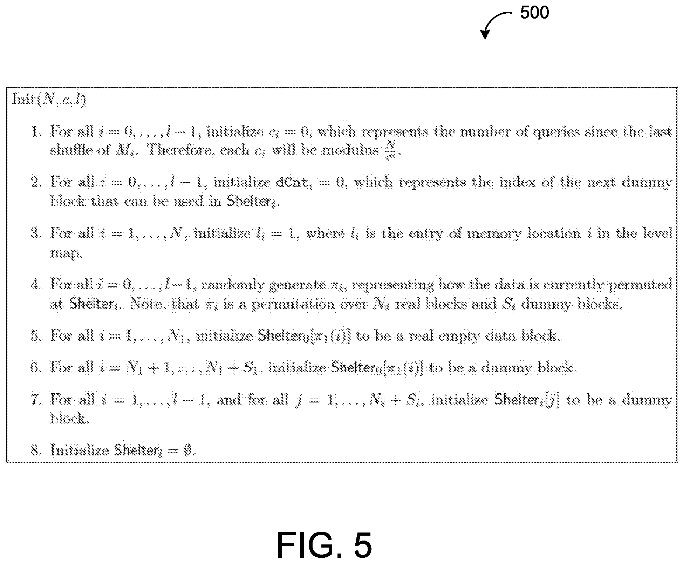

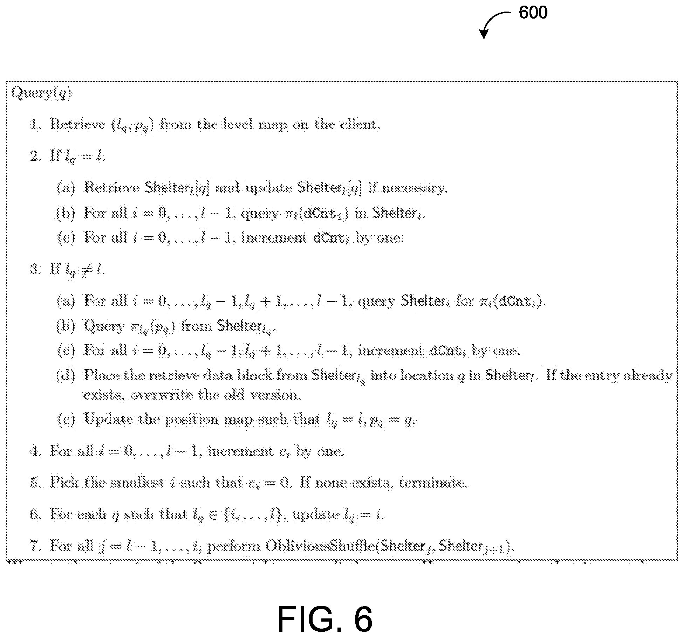

FIG. 5 provides an example algorithm 500 initializing the memory levels ($l_i$) of the memory hardware 114, 122. FIG. 6 provides an example algorithm 600 for execution of the instruction 400 at the client device 120 to execute a query (q) for a data block ($B_q$).

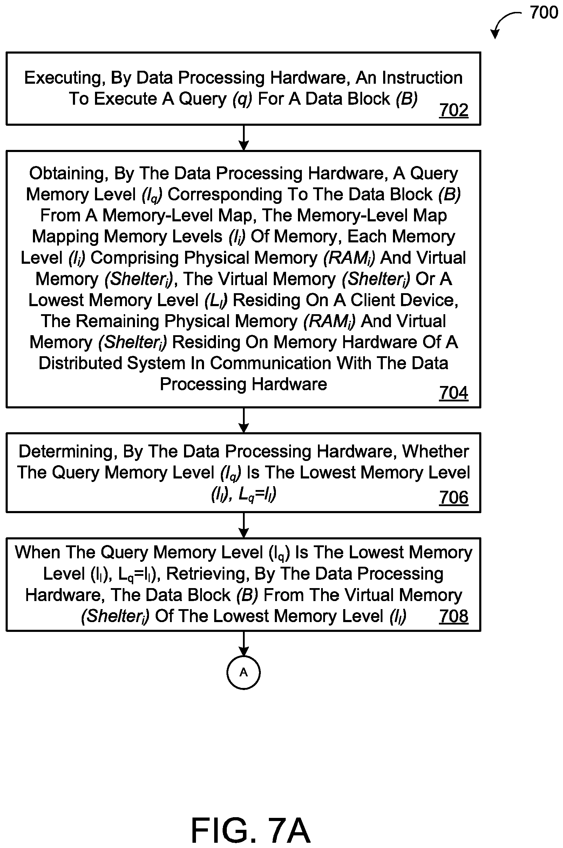

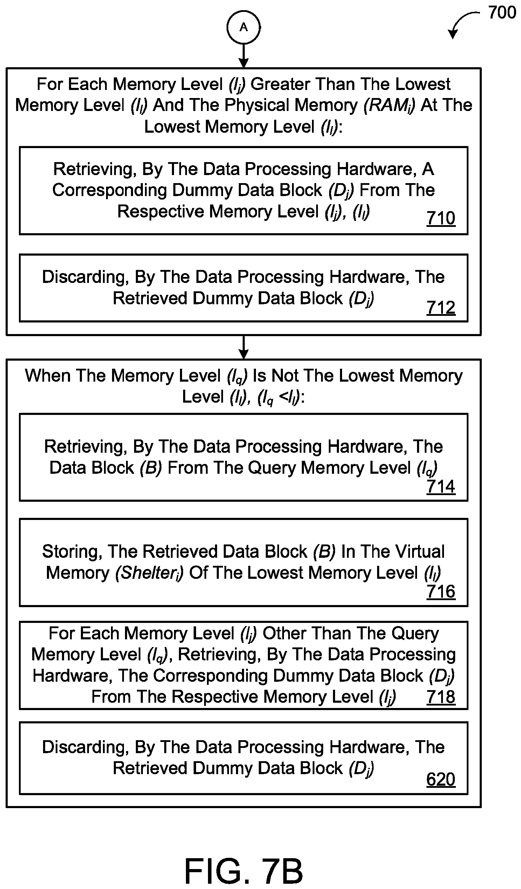

FIGS. 7A and 7B illustrate a method 700 for obliviously executing queries for data blocks (B). At block 702, the method 700 includes executing, by data processing hardware 124, an instruction 400 to execute a query (q) for a data block (B). At 704, the method 700 includes obtaining, by the data processing hardware 124, a query memory level ($l_q$) corresponding to the data block (B) from a memory-level map 300. The memory-level map 300 maps memory levels ($l_i$) of memory 114, 112, each memory level ($l_i$) including physical memory ($RAM_i$) 210 and virtual memory ($Shelter_i$) 220. The virtual memory ($Shelter_i$) 220 of a lowest memory level ($l_i$) resides on a client device 120 and the remaining physical memory ($RAM_i$) 210 and virtual memory ($Shelter_i$) 220 reside on memory hardware 114 of a distributed system 140 in communication with the data processing hardware 124.

At block 706, the method 700 includes determining, by the data processing hardware 124, whether the query memory level ($l_q$) is the lowest memory level ($l_i$), ($l_q = l_i$). At block 708, when the query memory level ($l_q$) is the lowest memory level ($l_i$), ($l_q = l_i$), the method 700 includes retrieving, by the data processing hardware 124, the data block (B) from the virtual memory ($Shelter_i$)

220 of the lowest memory level ($l_i$). For each memory level ($l_j$) greater than the lowest memory level ($l_i$) and the physical memory ($RAM_i$) 210 at the lowest memory level ($l_i$), the method 700 includes, at block 710, retrieving, by the data processing hardware 124, a corresponding dummy data block ($D_j$) from the respective memory level ($l_j$), ($l_i$) and, at block 712, discarding, by the data processing hardware 124, the retrieved dummy data block ($D_j$).

On the other hand, when the query memory level ($l_q$) is not lowest memory level ($l_i$), ($l_q = l_i$), the method 700 includes, at block 714, retrieving, by the data processing hardware 124, the data block (B) from the query memory level ($l_q$) and, at block 716, storing the retrieved data block (B) in the virtual memory ($Shelter_i$) 220 of a lowest memory level ($l_i$).

At block 718, for each memory level ($l_i$) other than the query memory level ($l_q$), the method 700 includes retrieving, by the data processing hardware 124, the corresponding dummy block ($D_j$) from the respective memory level ($l_j$). At block 720, the method includes discarding, by the data processing hardware 124, the retrieved dummy data block ($D_j$).

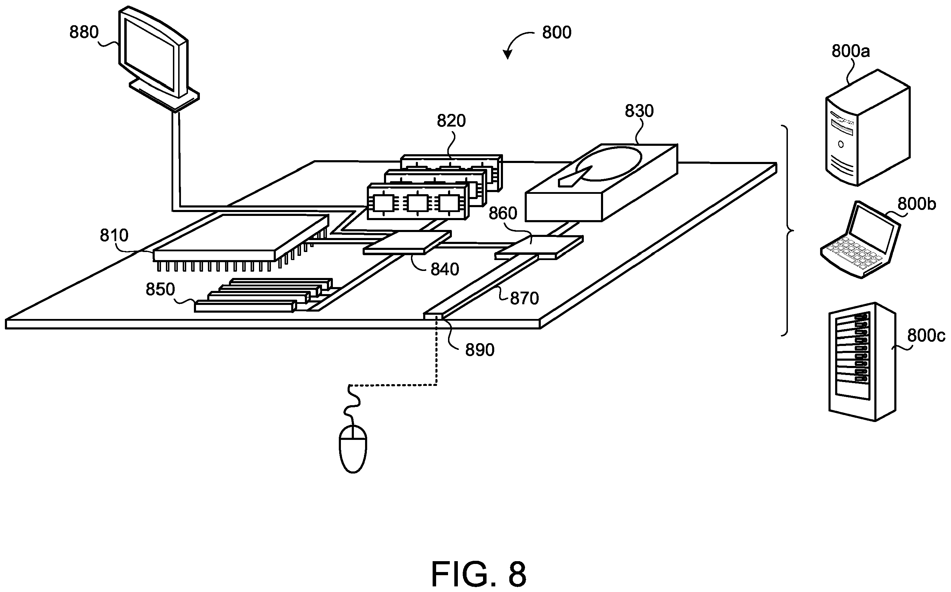

FIG. 8 is schematic view of an example computing device 800 that may be used to implement the systems and methods described in this document. The computing device 800 is intended to represent various forms of digital computers, such as laptops, desktops, workstations, personal digital assistants, servers, blade servers, mainframes, and other appropriate computers. The components shown here, their connections and relationships, and their functions, are meant to be exemplary only, and are not meant to limit implementations of the inventions described and/or claimed in this document.

The computing device 800 includes a processor 810 (e.g., data processing hardware 112), memory 820, a storage device 830, a high-speed interface/controller 840 connecting to the memory 820 and high-speed expansion ports 850, and a low speed interface/controller 860 connecting to low speed bus 870 and storage device 830. The computing device 800 may reside at the client device 120 and/or the distributed system 140. Each of the components 810, 820, 830, 840, 850, and 860, are interconnected using various busses, and may be mounted on a common motherboard or in other manners as appropriate. The processor 810 can process instructions for execution within the computing device 800, including instructions stored in the memory 820 or on the storage device 830 to display graphical information for a graphical user interface (GUI) on an external input/output device, such as display 880 coupled to high speed interface 840. In other implementations, multiple processors and/or multiple buses may be used, as appropriate, along with multiple memories and types of memory. Also, multiple computing devices 800 may be connected, with each device providing portions of the necessary operations (e.g., as a server bank, a group of blade servers, or a multiprocessor system).

The memory 820 (e.g., memory hardware) stores information non-transitorily within the computing device 800. The memory 820 may be a computer-readable medium, a volatile memory unit(s), or non-volatile memory unit(s). The non-transitory memory 820 may be physical devices used to store programs (e.g., sequences of instructions) or data (e.g., program state information) on a temporary or permanent basis for use by the computing device 800. Examples of non-volatile memory include, but are not limited to, flash memory and read-only memory (ROM) / programmable read-only memory (PROM) / erasable programmable read-only memory (EPROM) / electronically erasable programmable read-only memory (EEPROM) (e.g., typically used for firmware, such as boot programs). Examples of volatile memory include, but are not limited to, random access memory (RAM), dynamic random access memory (DRAM), static random access memory (SRAM), phase change memory (PCM) as well as disks or tapes.

The storage device 830 is capable of providing mass storage for the computing device 800. In some implementations, the storage device 830 is a computer-readable medium. In various different implementations, the storage device 830 may be a floppy disk device, a hard disk device, an optical disk device, or a tape device, a flash memory or other similar solid state memory device, or an array of devices, including devices in a storage area network or other configurations. In additional implementations, a computer program product is tangibly embodied in an information carrier. The computer program product contains instructions that, when executed, perform one or more methods, such as those described above. The information carrier is a computer- or machine-readable medium, such as the memory 820, the storage device 830, or memory on processor 810.

The high speed controller 840 manages bandwidth-intensive operations for the computing device 800, while the low speed controller 860 manages lower bandwidth-intensive operations. Such allocation of duties is exemplary only. In some implementations, the high-speed controller 840 is coupled to the memory 820, the display 880 (e.g., through a graphics processor or accelerator), and to the high-speed expansion ports 850, which may accept various expansion cards (not shown). In some implementations, the low-speed controller 860 is coupled to the storage device 830 and low-speed expansion port 870. The low-speed expansion port 870, which may include various communication ports (e.g., USB, Bluetooth, Ethernet, wireless Ethernet), may be coupled to one or more input/output devices, such as a keyboard, a pointing device, a scanner, or a networking device such as a switch or router, e.g., through a network adapter.

The computing device 800 may be implemented in a number of different forms, as shown in the figure. For example, it may be implemented as a standard server 800a or multiple times in a group of such servers 800a, as a laptop computer 800b, or as part of a rack server system 800c.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor and can be implemented in a high-level procedural and/or object-oriented programming language, and/or in assembly/machine language. As used herein, the terms "machine-readable medium" and "computer-readable medium" refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

Implementations of the subject matter and the functional operations described in this specification can be implemented in digital electronic circuitry, or in computer software, firmware, or hardware, including the structures disclosed in this specification and their structural equivalents, or in combinations of one or more of them. Moreover, subject matter described in this specification can be implemented as one or more computer program products, i.e., one or more modules of computer program instructions encoded on a computer readable medium for execution by, or to control the operation of, data processing apparatus. The computer readable medium can be a machine-readable storage device, a machine-readable storage substrate, a memory device, a composition of matter affecting a machine-readable propagated signal, or a combination of one or more of them. The terms "data processing apparatus", "computing device" and "computing processor" encompass all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them. A propagated signal is an artificially generated signal, e.g., a machine-generated electrical, optical, or electromagnetic signal that is generated to encode information for transmission to suitable receiver apparatus.

A computer program (also known as an application, program, software, software application, script, or code) can be written in any form of programming language, including compiled or interpreted languages, and it can be deployed in any form, including as a stand-alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio player, a Global Positioning System (GPS) receiver, to name just a few. Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To provide for interaction with a user, one or more aspects of the disclosure can be implemented on a computer having a display device, e.g., a CRT (cathode ray tube), LCD (liquid crystal display) monitor, or touch screen for displaying information to the user and optionally a keyboard and a pointing device, e.g., a mouse or a trackball, by which the user can provide input to the computer. Other kinds of devices can be used to provide interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

One or more aspects of the disclosure can be implemented in a computing system that includes a backend component, e.g., as a data server, or that includes a middleware component, e.g., an application server, or that includes a frontend component, e.g., a client computer having a graphical user interface or a Web browser through which a user can interact with an implementation of the subject matter described in this specification, or any combination of one or more such backend, middleware, or frontend components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some implementations, a server transmits data (e.g., an HTML page) to a client device (e.g., for purposes of displaying data to and receiving user input from a user interacting with the client device). Data generated at the client device (e.g., a result of the user interaction) can be received from the client device at the server.

While this specification contains many specifics, these should not be construed as limitations on the scope of the disclosure or of what may be claimed, but rather as descriptions of features specific to particular implementations of the disclosure. Certain features that are described in this specification in the context of separate implementations can also be implemented in combination in a single implementation. Conversely, various features that are described in the context of a single implementation can also be implemented in multiple implementations separately or in any suitable sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multi-tasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

A number of implementations have been described. Nevertheless, it will be understood that various modifications may be made. Accordingly, other implementations are within the scope of the following claims.

## Claims

1. A method (700) comprising:

   executing, by data processing hardware (124), an instruction (400) to execute a query ($q$) for a data block ($B$) of a plurality of data blocks;
   obtaining, by the data processing hardware (124), a query memory level ($l_q$) corresponding to the data block ($B$) from a memory-level map (300), the memory-level map (300) mapping memory levels ($l_i$) of a memory (122) of a client device (120) and of memory hardware (114) of memory hosts (110) of a storage abstraction (200) of a single-sided distributed system (140), the memory-level map (300) mapping data blocks (B), ($B_1 — B_N$) to a corresponding query memory level ($l_q$) associated with a lowest one of the memory levels ($l_i$) at which the corresponding data block (B) of the executed query ($q$) is stored, each memory level ($l_i$) comprising physical memory, RAMi, and virtual memory, Shelter$_i$, the virtual memory, Shelter$_l$, of a lowest memory level ($l_l$) residing on the memory (122) of the client device (120), the remaining physical memory, RAM$_i$, and virtual memory, Shelter$_i$, residing on memory hardware (114) of the memory hosts (110) of the single-sided distributed system (140) in communication with the data processing hardware (124), wherein each of the memory hosts (110) include a remote direct memory access , RDMA-capable network interface controller, NIC (116);
   determining, by the data processing hardware (124), whether the query memory level ($l_q$) is the lowest memory level ($l_l$), ($l_q = l_l$);
   when the query memory level ($l_q$) is the lowest memory level ($l_l$), ($l_q = l_l$):

   retrieving, by the data processing hardware (124), the data block (B) from the virtual memory, Shelter$_l$, of the lowest memory level ($l_l$); and
   for each memory level ($l_j$) greater than the lowest memory level ($l_l$) and the physical memory, RAM$_l$, at the lowest memory level ($l_l$):

   sending, by the data processing hardware (124), one or more fake queries (404) to a respective RDMA-capable NIC (116) corresponding to the respective memory level ($l_j$);
   retrieving, by the data processing hardware (124), a corresponding dummy data block ($D_j$) from the respective memory level ($l_j$), ($l_l$); and
   discarding, by the data processing hardware (124), the retrieved dummy data block ($D_j$); and

   when the memory level ($l_q$) is not the lowest memory level ($l_l$), ($lq < l_l$):

   retrieving, by the data processing hardware (124), the data block (B) from the query memory level ($l_q$);
   storing the retrieved data block (B) in the virtual memory , Shelter$_l$, of the lowest memory level ($l_l$);
   for each memory level ($l_j$) other than the query memory level ($l_q$),

   retrieving, by the data processing hardware (124), the corresponding dummy data block ($D_j$) from the respective memory level ($l_j$) via a respective RDMA-capable NIC (116) corresponding to the respective memory level ($l_j$); and
   discarding, by the data processing hardware (124), the retrieved dummy data block ($D_j$).

2. The method (700) of claim 1, wherein, for each memory level ($l_i$), the physical memory RAM$_i$, has a defined first size to hold $N_i$ data blocks ($B$) and the virtual memory, Shelter$_i$, has a defined second size to hold $S_i$ data blocks (B), wherein $S_i = N_i/c$ and $c$ is a constant greater than one.

3. The method (700) of claim 1 or 2, wherein the corresponding dummy data block ($D_j$) of the respective memory level ($l_j$) comprises a permutation ($\pi_j$) of a pointer ($dCnt_j$) to a respective data block ($N_j$) at the respective memory level ($l_j$); and
   further comprising incrementing, by the data processing hardware (124), the pointer ($dCnt_j$).

4. The method (700) of any of claims 1-3, further comprising, when the memory level ($I_q$) is not the lowest memory level ($I_l$), updating, by the data processing hardware (124), the level map (300) to indicate that the retrieved data block ($B$) is stored in the virtual memory, Shelter$_l$, of the lowest memory level ($I_l$).

5. The method (700) of any of claims 1-4, wherein the distributed system (140) is configured to initialize at least one data block ($B_i$) of the corresponding virtual memory, Shelter$_i$, of at least one memory level ($I_i$) as a respective dummy data block ($D_i$); or wherein the respective dummy data block ($D_i$) comprises a permutation of a size of the corresponding data block ($N_i$), an index of the corresponding data block ($N_i$), or a memory level number of the corresponding memory level ($I_i$).

6. The method (700) of any of claims 1-5, further comprising obliviously shuffling, by the data processing hardware (124), the corresponding virtual memory, Shelter$_i$, of each memory level ($I_i$); or
obliviously shuffling, by the data processing hardware (124), the virtual memory, Shelter$_l$, of the lowest memory level ($I_l$) with the virtual memory, Shelter$_{l-1}$, of a next memory level ($I_i$) greater than the lowest memory level ($I_l$).

7. The method (700) of claim 6, wherein obliviously shuffling comprises:

    selecting a random permutation on the data blocks ($B$) from the virtual memory, Shelter$_l$, Shelter$_{l-1}$;
    decrypting each of the data blocks ($B$) from the virtual memory, Shelter$_l$, Shelter$_{l-1}$;
    re-encrypting each of the data blocks ($B$) from the virtual memory, Shelter$_l$, Shelter$_{l-1}$; and
    shuffling the re-encrypted data blocks ($B$) using the random permutation on the re-encrypted data blocks ($B$).

8. A client device (120) comprising:

    data processing hardware (124); and
    memory hardware (122) in communication with the data processing hardware (124), the memory hardware (122) storing instructions that when executed on the data processing hardware (124) cause the data processing hardware (124) to perform operations comprising:

        executing an instruction (400) to execute a query ($q$) for a data block ($B$) of a plurality of data blocks;
        obtaining a query memory level ($I_q$) corresponding to the data block ($B$) from a memory-level map (300), the memory-level map (300) mapping memory levels ($I_i$) of the memory (122) of the client device (120) and of memory hardware (114) of memory hosts (110) of a storage abstraction (200) of a single-sided distributed system (140), the memory-level map (300) mapping data blocks (B), ($B_1 — B_N$) to a corresponding query memory level ($I_q$) associated with a lowest one of the memory levels ($I_i$) at which the corresponding data block ($B$) of the executed query ($q$) is stored, each memory level ($I_i$) comprising physical memory, RAM$_i$, and virtual memory, Shelter$_i$, the virtual memory, Shelter$_l$, of a lowest memory level ($I_l$) residing on the memory hardware (122) of the client device (120), the remaining physical memory, RAM$_i$, and virtual memory, Shelter$_i$, residing on memory hardware (114) of the memory hosts (110) of the single-sided distributed system (140) in communication with the data processing hardware (124), wherein each of the memory hosts (110) include a remote direct memory access, RDMA-capable network interface controller, NIC (116);
        determining whether the query memory level ($I_q$) is the lowest memory level ($I_l$), ($I_q = I_l$);
        when the query memory level ($I_q$) is the lowest memory level ($I_l$), ($I_q = I_l$): retrieving the data block ($B$) from the virtual memory, Shelter$_l$, of the lowest memory level ($I_l$); and
        for each memory level ($I_i$) greater than the lowest memory level ($I_l$) and the physical memory, RAM$_l$, at the lowest memory level ($I_l$):

            sending, by the data processing hardware (124), one or more fake queries (404) to a respective RDMA-capable NIC (116) corresponding to the respective memory level ($I_j$); retrieving a corresponding dummy data block ($D_j$) from the respective memory level ($I_j$), ($I_l$); and discarding the retrieved dummy data block ($D_j$); and
            when the memory level ($I_q$) is not the lowest memory level ($I_l$), ($I_q < I_l$):

                retrieving the data block ($B$) from the query memory level ($I_q$);
                storing the retrieved data block ($B$) in the virtual memory , Shelter$_l$, of the lowest memory level ($I_l$);
                for each memory level ($I_j$) other than the query memory level ($I_q$), retrieving the corresponding dummy data block ($D_j$) from the respective memory level ($I_j$) via a respec-

tive RDMA-capable NIC (116) corresponding to the respective memory level ($I_j$); and

discarding the retrieved dummy data block ($D_j$).

**9.** The client device (120) of claim 8, wherein, for each memory level ($I_i$), the physical memory, $RAM_i$, has a defined first size to hold $N_i$ data blocks ($B$) and the virtual memory ($Shelter_i$) has a defined second size to hold $S_i$ data blocks ($B$), wherein $S_i = N_i/c$ and $c$ is a constant greater than one.

**10.** The client device (120) of claim 8 or 9, wherein the corresponding dummy data block ($D_j$) of the respective memory level ($I_j$) comprises a permutation ($\pi_j$) of a pointer ($dCnt_j$) to a respective data block ($N_j$) at the respective memory level ($I_j$); and wherein the operations further comprise incrementing the pointer ($dCnt_j$).

**11.** The client device (120) of any of claims 8-10, wherein the operations further comprise, when the memory level ($I_q$) is not the lowest memory level ($I_l$), updating the level map (300) to indicate that the retrieved data block is stored in the virtual memory, $Shelter_l$, of the lowest memory level ($I_l$).

**12.** The client device (120) of any of claims 8-11, wherein the distributed system (140) is configured to initialize at least one data block ($B_i$) of the corresponding virtual memory, $Shelter_i$, of at least one memory level ($I_i$) as a respective dummy data block ($D_i$).

**13.** The client device (120) of any of claims 8-12, wherein the respective dummy data block ($D_i$) comprises a permutation of a size of the corresponding data block ($N_i$), an index of the corresponding data block ($N_i$), or a memory level number of the corresponding memory level ($I_i$).

**14.** The client device (120) of any of claims 8-13, wherein the operations further comprise obliviously shuffling the corresponding virtual memory, $Shelter_i$, of each memory level ($I_i$); and obliviously shuffling the virtual memory, $Shelter_l$, of the lowest memory level ($I_l$) with the virtual memory, $Shelter_{l-1}$, of a next memory level ($I_i$) greater than the lowest memory level ($I_l$).

**15.** The client device (120) of claim 14, wherein obliviously shuffling comprises:

selecting a random permutation for the data blocks ($B$) from the virtual memory, $Shelter_l$, $Shelter_{l-1}$;
decrypting each of the data blocks ($B$) from the virtual memory, $Shelter_l$, $Shelter_{l-1}$;
re-encrypting each of the data blocks ($B$) from

the virtual memory, $Shelter_l$, $Shelter_{l-1}$; and shuffling the re-encrypted data blocks ($B$) using the random permutation on the re-encrypted data blocks ($B$).

**Patentansprüche**

**1.** Verfahren (700), umfassend:

Ausführen eines Befehls (400) durch die Datenverarbeitungshardware (124), um eine Abfrage ($q$) für einen Datenblock ($B$) aus einer Vielzahl von Datenblöcken auszuführen;
Erhalten, durch die Datenverarbeitungshardware (124), einer Abfragespeicherebene ($I_q$), die dem Datenblock ($B$) entspricht, aus einer Speicherebenenabbildung (300), wobei die Speicherebenenabbildung (300) Speicherebenen ($I_i$) eines Speichers (122) eines Client-Geräts (120) und von Speicherhardware (114) von Speicherhosts (110) einer Speicherabstraktion (200) eines einseitig verteilten Systems (140) abbildet, die Speicherebenenabbildung (300) Datenblöcke ($B$), ($B_1$-$B_N$) auf eine entsprechende Abfragespeicherebene ($I_q$) abbildet, die mit einer niedrigsten der Speicherebenen ($I_i$) verbunden ist, auf der der entsprechende Datenblock ($B$) der ausgeführten Abfrage ($q$) gespeichert ist, wobei jede Speicherebene ($I_i$) physikalischen Speicher, $RAM_i$, und virtuellen Speicher, $Shelter_i$, umfasst, wobei der virtuelle Speicher, $Shelter_l$, einer niedrigsten Speicherebene ($I_l$) im Speicher (122) des Client-Geräts (120) liegt, der verbleibende physikalische Speicher, $RAM_i$, und virtuelle Speicher, $Shelter_i$, die sich auf der Speicherhardware (114) der Speicherhosts (110) des einseitig verteilten Systems (140) befinden, die mit der Datenverarbeitungshardware (124) kommunizieren, wobei jeder der Speicherhosts (110) einen RDMA-fähigen Netzwerkschnittstellen-Controller, NIC, (116) mit direktem Fernspeicherzugriff enthält;
Bestimmen, durch die Datenverarbeitungshardware (124), ob die Abfragespeicherebene ($I_q$) die niedrigste Speicherebene ($I_l$) ist, ($I_q$= $I_l$);
wenn die Abfragespeicherebene ($I_q$) die niedrigste Speicherebene ($I_l$) ist, ($I_q$ = $I_l$):

Abrufen des Datenblocks ($B$) aus dem virtuellen Speicher, $Shelter_l$, durch die Datenverarbeitungshardware (124), der niedrigsten Speicherebene ($I_l$); und
für jede Speicherebene ($I_j$), die größer ist als die niedrigste Speicherebene ($I_l$), und den physischen Speicher, $RAM_l$, auf der niedrigsten Speicherebene ($I_l$):
Senden, durch die Datenverarbeitungs-

hardware (124), einer oder mehrerer gefälschter Abfragen (404) an eine entsprechende RDMA-fähige NIC (116), die der entsprechenden Speicherebene ($l_j$) entspricht;

Abrufen, durch die Datenverarbeitungshardware (124), eines entsprechenden Dummy-Datenblocks ($D_j$) aus der entsprechenden Speicherebene ($l_j$), ($l_j$); und

Verwerfen des abgerufenen Dummy-Datenblocks ($D_j$) durch die Datenverarbeitungshardware (124); und

wenn die Speicherebene ($l_q$) nicht die niedrigste Speicherebene ($l_l$) ist, ($l_q < l_l$) ist:

Abrufen des Datenblocks (B) durch die Datenverarbeitungshardware (124) aus der Abfragespeicherebene ($l_q$);

Speichern des abgerufenen Datenblocks (B) im virtuellen Speicher, $Shelter_l$, der niedrigsten Speicherebene ($l_l$);

für jede andere Speicherebene ($l_j$) als die Abfragespeicherebene ($l_q$),

Abrufen des entsprechenden Dummy-Datenblocks ($D_j$) durch die Datenverarbeitungshardware (124) aus der entsprechenden Speicherebene ($l_j$) über eine entsprechende RDMA-fähige NIC (116), die der entsprechenden Speicherebene ($l_j$) entspricht; und

Verwerfen des abgerufenen Dummy-Datenblocks ($D_j$) durch die Datenverarbeitungshardware (124).

2. Verfahren (700) nach Anspruch 1, wobei für jede Speicherebene ($l_j$) der physische Speicher, $RAM_i$, eine definierte erste Größe hat, um $N_i$ Datenblöcke (B) zu halten, und der virtuelle Speicher, $Shelter_i$, eine definierte zweite Größe hat, um $S_i$ Datenblöcke (B) zu halten, wobei $S_i = N_i / c$ und c eine Konstante größer als eins ist.

3. Verfahren (700) nach Anspruch 1 oder 2, wobei der entsprechende Dummy-Datenblock ($D_j$) der entsprechenden Speicherebene ($l_j$) eine Permutation ($\pi_j$) eines Zeigers ($dCnt_j$) auf einen entsprechenden Datenblock ($N_j$) auf der entsprechenden Speicherebene ($l_j$) umfasst; und ferner das Inkrementieren des Zeigers ($dCnt_j$) durch die Datenverarbeitungshardware (124) umfasst.

4. Verfahren (700) nach einem der Ansprüche 1-3, ferner umfassend, wenn die Speicherebene ($l_q$) nicht die niedrigste Speicherebene ($l_l$) ist, das Aktualisieren der Ebenenabbildung (300) durch die Datenverarbeitungshardware (124), um anzuzeigen, dass der abgerufene Datenblock (B) in dem virtuellen Speicher, $Shelter_l$, der niedrigsten Speicherebene ($l_l$) gespeichert ist.

5. Verfahren (700) nach einem der Ansprüche 1-4, wobei das verteilte System (140) so konfiguriert ist, dass es mindestens einen Datenblock ($B_i$) des entsprechenden virtuellen Speichers, $Shelter_i$, mindestens einer Speicherebene ($l_i$) als einen entsprechenden Dummy-Datenblock ($D_i$) initialisiert; oder wobei der entsprechende Dummy-Datenblock ($D_i$) eine Permutation einer Größe des entsprechenden Datenblocks ($N_i$), eines Index des entsprechenden Datenblocks ($N_i$) oder einer Speicherebenen-Nummer der entsprechenden Speicherebene ($l_i$) umfasst.

6. Verfahren (700) nach einem der Ansprüche 1-5, das ferner umfasst, dass die Datenverarbeitungshardware (124) den entsprechenden virtuellen Speicher, $Shelter_i$, jeder Speicherebene ($l_i$) unbewusst mischt; oder unbewusstes Mischen des virtuellen Speichers, $Shelter_l$, der niedrigsten Speicherebene ($l_l$) mit dem virtuellen Speicher, $Shelter_{(l-1)}$, einer nächsten Speicherebene ($l_i$), die größer ist als die niedrigste Speicherebene ($l_l$), durch die Datenverarbeitungshardware (124).

7. Verfahren (700) nach Anspruch 6, wobei das unbewusste Mischen umfasst:

Auswählen einer zufälligen Permutation der Datenblöcke (B) aus dem virtuellen Speicher, $Shelter_l$, $Shelter_{(l-1)}$;

Entschlüsseln jedes der Datenblöcke (B) aus dem virtuellen Speicher, $Shelter_l$, $Shelter_{(l-1)}$;

erneutes Verschlüsseln jedes der Datenblöcke (B) aus dem virtuellen Speicher, $Shelter_l$, $Shelter_{(l-1)}$; und

Mischen der neu verschlüsselten Datenblöcke (B) unter Verwendung der zufälligen Permutation auf den neu verschlüsselten Datenblöcken (B).

8. Client-Gerät (120), umfassend:

Datenverarbeitungshardware (124); und
Speicherhardware (122) in Kommunikation mit der Datenverarbeitungshardware (124), wobei die Speicherhardware (122) Befehle speichert, die, wenn sie auf der Datenverarbeitungshardware (124) ausgeführt werden, die Datenverarbeitungshardware (124) veranlassen, Operationen durchzuführen, die Folgendes umfassen:

Ausführen eines Befehls (400), um eine Abfrage (q) für einen Datenblock (B) aus einer Vielzahl von Datenblöcken auszuführen; Erhalten einer Abfragespeicherebene ($l_q$), die dem Datenblock (B) entspricht, aus einer Speicherebenenabbildung (300), wobei die Speicherebenenabbildung (300) Speicherebenen ($l_j$) des Speichers (122) des Client-Geräts (120) und von Speicherhardware (114) von Speicherhosts (110) einer Speicherabstraktion (200) eines einseitig verteilten Systems (140) abbildet, die Speicherebenenabbildung (300) Datenblöcke (B), ($B_1$-$B_N$) auf eine entsprechende Abfragespeicherebene ($l_q$) abbildet, die mit einer niedrigsten der Speicherebenen ($l_l$) verbunden ist, auf der der entsprechende Datenblock (B) der ausgeführten Abfrage (q) gespeichert ist, wobei jede Speicherebene ($l_j$) physikalischen Speicher, $RAM_i$, und virtuellen Speicher, $Shelter_i$, umfasst, wobei der virtuelle Speicher, $Shelter_l$, einer niedrigsten Speicherebene ($l_l$) im Speicher (122) des Client-Geräts (120) liegt, der verbleibende physikalische Speicher, $RAM_i$, und virtuelle Speicher, $Shelter_i$, die sich auf der Speicherhardware (114) der Speicherhosts (110) des einseitig verteilten Systems (140) befinden, die mit der Datenverarbeitungshardware (124) kommunizieren, wobei jeder der Speicherhosts (110) einen RDMA-fähigen Netzwerkschnittstellen-Controller, NIC, (116) mit direktem Fernspeicherzugriff enthält; Bestimmen ob die Abfragespeicherebene ($l_q$) die niedrigste Speicherebene ($l_l$) ist, ($l_q$ = $l_l$), wenn die Abfragespeicherebene ($l_q$) die niedrigste Speicherebene ($l_l$) ist, ($l_q$= $l_l$):

Abrufen des Datenblocks (B) aus dem virtuellen Speicher, $Shelter_l$, der niedrigsten Speicherebene ($l_l$); und für jede Speicherebene ($l_j$), die größer ist als die niedrigste Speicherebene ($l_l$), und den physischen Speicher, $RAM_l$, auf der niedrigsten Speicherebene ($l_l$):

Senden einer oder mehrerer gefälschter Abfragen (404) an eine entsprechende RDMA-fähige NIC (116), die der entsprechenden Speicherebene ($l_j$) entspricht; Abrufen eines entsprechenden Dummy-Datenblocks ($D_j$) aus der entsprechenden Speicherebene ($l_j$), ($l_l$); und Verwerfen des abgerufenen Dummy-Datenblocks ($D_j$); und wenn die

Speicherebene ($l_q$) nicht die niedrigste Speicherebene ($l_l$) ist, ($l_q$ < $l_l$) ist:

Abrufen des Datenblocks (B) aus der Abfragespeicherebene ($l_q$); Speichern des abgerufenen Datenblocks (B) im virtuellen Speicher, $Shelter_l$, der niedrigsten Speicherebene ($l_l$); für jede andere Speicherebene ($l_j$) als die Abfragespeicherebene ($l_q$),

Abrufen des entsprechenden Dummy-Datenblocks ($D_j$) aus der entsprechenden Speicherebene ($l_j$) über eine entsprechende RDMA-fähige NIC (116), die der entsprechenden Speicherebene ($l_j$) entspricht; und Verwerfen des abgerufenen Dummy-Datenblocks ($D_j$).

9. Client-Vorrichtung (120) nach Anspruch 8, wobei für jede Speicherebene ($l_i$) der physische Speicher, $RAM_i$, eine definierte erste Größe hat, um $N_i$ Datenblöcke (B) zu halten, und der virtuelle Speicher, $Shelter_i$, eine definierte zweite Größe hat, um $S_i$ Datenblöcke (B) zu halten, wobei $S_i = N_i/ c$ und c eine Konstante größer als eins ist.

10. Client-Vorrichtung (120) nach Anspruch 8 oder 9, wobei der entsprechende Dummy-Datenblock ($D_i$) der entsprechenden Speicherebene ($l_j$) eine Permutation ($\pi_j$) eines Zeigers ($dCnt_j$) auf einen entsprechenden Datenblock ($N_j$) auf der entsprechenden Speicherebene ($l_j$) umfasst; und ferner das Inkrementieren des Zeigers ($dCnt_j$) durch die Datenverarbeitungshardware (124) umfasst.

11. Client-Vorrichtung (120) nach einem der Ansprüche 8-10, wobei die Operationen ferner umfassen, wenn die Speicherebene ($l_q$) nicht die niedrigste Speicherebene ($l_l$) ist, das Aktualisieren der Ebenenabbildung (300), um anzuzeigen, dass der abgerufene Datenblock (B) in dem virtuellen Speicher, $Shelter_l$, der niedrigsten Speicherebene ($l_l$) gespeichert ist.

12. Client-Vorrichtung (120) nach einem der Ansprüche 8-11, wobei das verteilte System (140) so konfiguriert ist, dass es mindestens einen Datenblock ($B_i$) des entsprechenden virtuellen Speichers, $Shelter_i$, mindestens einer Speicherebene ($l_i$) als einen entsprechenden Dummy-Datenblock ($D_i$) initialisiert.

13. Client-Vorrichtung (120) nach einem der Ansprüche 8-12, wobei der entsprechende Dummy-Datenblock ($D_i$) eine Permutation einer Größe des entsprechenden Datenblocks ($N_i$), eines Index des entsprechen-

den Datenblocks $(N_j)$ oder einer Speicherebenen-Nummer der entsprechenden Speicherebene $(l_i,)$ umfasst.

14. Client-Vorrichtung (120) nach einem der Ansprüche 8-13, wobei die Operationen ferner das unbewusste Mischen des entsprechenden virtuellen Speichers, Shelter$_i$, jeder Speicherebene $(l_i)$ umfasst; oder das unbewusste Mischen des virtuellen Speichers, Shelter$_l$, der niedrigsten Speicherebene $(l_l)$ mit dem virtuellen Speicher, Shelter$_{(l-1)}$, einer nächsten Speicherebene $(l_i)$, die größer ist als die niedrigste Speicherebene $(l_l)$.

15. Client-Vorrichtung (120) nach Anspruch 14, wobei das unbewusste Mischen umfasst:

Auswählen einer zufälligen Permutation der Datenblöcke $(B)$ aus dem virtuellen Speicher, Shelter$_l$, Shelter$_{(l-1)}$;
Entschlüsseln jedes der Datenblöcke $(B)$ aus dem virtuellen Speicher, Shelter$_l$, Shelter$_{(l-1)}$;
erneutes Verschlüsseln jedes der Datenblöcke $(B)$ aus dem virtuellen Speicher, Shelter$_l$, Shelter$_{(l-1)}$; und
Mischen der neu verschlüsselten Datenblöcke $(B)$ unter Verwendung der zufälligen Permutation auf den neu verschlüsselten Datenblöcken $(B)$.

**Revendications**

1. Un procédé (700) comprenant :

le fait d'exécuter, par un matériel (124) de traitement de données, une instruction (400) pour exécuter une requête (q) pour un bloc de données $(B)$ d'une pluralité de blocs de données ;
le fait d'obtenir, par le matériel (124) de traitement de données, un niveau de mémoire de requête $(l_q)$ correspondant au bloc de données $(B)$ à partir d'une mappe (300) de niveaux de mémoire, la mappe (300) de niveaux de mémoire mappant des niveaux de mémoire $(l_i)$ d'une mémoire (122) d'un dispositif client (120) et d'un matériel à mémoire (114) d'hôtes de mémoire (110) d'une abstraction de stockage (200) d'un système distribué unilatéral (140), la mappe (300) de niveaux de mémoire mappant des blocs de données (B), $(B_1 - B_N)$ à un niveau de mémoire de requête correspondant $(l_q)$ associé à un niveau le plus bas parmi les niveaux de mémoire $(l_i)$ au niveau duquel le bloc de données correspondant (B) de la requête exécutée (q) est stocké, chaque niveau de mémoire $(l_i)$ comprenant une mémoire physique, RAMi et une mémoire virtuelle Shelter$_i$, la mémoire vir-

tuelle, Shelter$_1$, d'un niveau de mémoire le plus bas $(l_l)$ résidant sur la mémoire (122) du dispositif client (120), la mémoire physique restante, RAMi, et la mémoire virtuelle, Shelter$_i$, résidant sur le matériel à mémoire (114) des hôtes de mémoire (110) du système distribué unilatéral (140) en communication avec le matériel (124) de traitement de données, chacun des hôtes de mémoire (110) comprenant un accès mémoire direct à distance, un contrôleur d'interface réseau, en abrégé NIC, (116) compatible RDMA ;
le fait de déterminer, par le matériel (124) de traitement de données, si le niveau de mémoire de requête $(l_q)$ est le niveau de mémoire le plus bas $(l_l)$, $(l_q = l_l)$ ;
lorsque le niveau de mémoire de requête $(l_q)$ est le niveau de mémoire le plus bas $(l_l)$, $l_q = l_l)$ :

le fait de récupérer, par le matériel (124) de traitement de données, le bloc de données (B) de la mémoire virtuelle Shelter$_1$, du niveau de mémoire le plus bas $(l_l)$ ; et
pour chaque niveau de mémoire $(l_j)$ supérieur au niveau de mémoire le plus bas $(l_l)$ et la mémoire physique, RAM$_1$, au niveau de mémoire le plus bas $(l_l)$ :

le fait d'envoyer, par le matériel (124) de traitement de données, une ou plusieurs fausses requêtes (404) à un NIC (116) compatible RDMA respectif correspondant au niveau de mémoire $(l_j)$ respectif ;
le fait de récupérer, par le matériel (124) de traitement de données, depuis le niveau de mémoire respectif $(l_j)$, $(l_l)$, un bloc de données fictif $(D_j)$ correspondant ; et
le fait de rejeter, par le matériel (124) de traitement de données, le bloc de données fictif $(D_j)$ récupéré ; et

lorsque le niveau de mémoire $(l_q)$ n'est pas le niveau de mémoire le plus bas $(l_l)$, $(l_q < l_l)$ :

le fait de récupérer, par le matériel (124) de traitement de données, depuis le niveau de mémoire de requête $(l_q)$, le bloc de données $(B)$ ;
le fait de stocker le bloc de données $(B)$ récupéré dans la mémoire virtuelle, Shelter$_1$, du niveau de mémoire le plus bas $(l_l)$ ;
pour chaque niveau de mémoire $(l_j)$ autre que le niveau de mémoire de requête $(l_q)$,

le fait de récupérer, par le matériel (124) de traitement de données, depuis le niveau de mémoire respectif $(l_j)$, le bloc

de données fictif ($D_j$) correspondant via un NIC respectif (116) compatible RDMA correspondant au niveau de mémoire ($l_j$) respectif, et

le fait de rejeter, par le matériel (124) de traitement de données, le bloc de données fictif ($D_j$) récupéré.

2. Le procédé (700) selon la revendication 1, dans lequel, pour chaque niveau de mémoire ($l_j$), la mémoire physique, RAMi, a une première taille définie pour contenir $N_i$ blocs de données ($B$) et la mémoire virtuelle, *Shelter*$_i$, a une deuxième taille définie pour contenir $S_i$ blocs de données ($B$), $S_i$ étant égal à $N_i/c$ et c étant une constante supérieure à un.

3. Le procédé (700) selon la revendication 1 ou la revendication 2, dans lequel le bloc de données fictif ($D_j$) correspondant du niveau de mémoire ($l_j$) respectif comprend une permutation ($\pi_j$) d'un pointeur ($dCnt_j$) vers un bloc de données ($N_j$) respectif au niveau de la mémoire ($l_j$) respective ; et comprenant en outre le fait d'incrémenter, par le matériel (124) de traitement de données, le pointeur ($dCnt_j$).

4. Le procédé (700) selon l'une quelconque des revendications 1 à 3, comprenant en outre, lorsque le niveau de mémoire ($l_q$) n'est pas le niveau de mémoire le plus bas ($l_l$), le fait de mettre à jour, par le matériel (124) de traitement de données, la mappe de niveau (300) pour indiquer que le bloc de données ($B$) récupéré est stocké dans la mémoire virtuelle, Shelter$_1$, du niveau de mémoire le plus bas ($l_l$).

5. Le procédé (700) selon l'une quelconque des revendications 1 à 4, dans lequel le système distribué (140) est configuré pour initialiser au moins un bloc de données ($B_i$) de la mémoire virtuelle, *Shelter*$_i$, correspondante d'au moins un niveau de mémoire ($l_i$) en tant que bloc de données fictif ($D_i$) respectif ; ou dans lequel le bloc de données fictif ($D_i$) respectif comprend une permutation d'une taille du bloc de données ($N_i$) correspondant, un index du bloc de données ($N_i$) correspondant, ou un numéro de niveau de mémoire du niveau de mémoire ($l_i$) correspondant.

6. Le procédé (700) selon l'une quelconque des revendications 1 à 5, comprenant en outre le fait, par le matériel (124) de traitement de données, de réarranger de façon indifférente la mémoire virtuelle, *Shelter*$_i$, correspondante de chaque niveau de mémoire ($l_i$) ; ou le fait, par le matériel (124) de traitement de données, de réarranger de façon indifférente la mémoire virtuelle, Shelter$_1$, du niveau de mémoire le plus bas ($l_l$) avec la mémoire virtuelle, Shelter$_{1-1}$, d'un niveau de mémoire suivant ($l_i$) supérieur au niveau de mémoire le plus bas ($l_l$).

7. Le procédé (700) selon la revendication 6, dans lequel le réarrangement de façon indifférente comprend :

le fait de sélectionner une permutation aléatoire sur les blocs de données ($B$) provenant de la mémoire virtuelle, Shelter$_1$, Shelter$_{1-1}$ ;
le fait de décrypter chacun des blocs de données ($B$) provenant de la mémoire virtuelle, Shelter$_1$, Shelter$_{1-1}$ ;
le fait de recrypter chacun des blocs de données ($B$) provenant de la mémoire virtuelle, Shelter$_1$, Shelter$_{1-1}$ ; et
le fait de réarranger les blocs de données ($B$) recryptés en utilisant la permutation aléatoire sur les blocs de données ($B$) recryptés.

8. Un dispositif client (120) comprenant :

un matériel (124) de traitement de données ; et
un matériel à mémoire (122) en communication avec le matériel (124) de traitement de données, le matériel à mémoire (122) stockant des instructions qui, lorsqu'elles sont exécutées sur le matériel (124) de traitement de données, amènent le matériel (124) de traitement de données à effectuer des opérations comprenant :

le fait d'exécuter une instruction (400) pour exécuter une requête (q) pour un bloc de données ($B$) d'une pluralité de blocs de données ;
le fait d'obtenir d'une mappe (300) de niveaux de mémoire un niveau de mémoire de requête ($l_q$) correspondant au bloc de données ($B$), la mappe (300) de niveaux de mémoire mappant des niveaux de mémoire ($l_i$) de la mémoire (122) du dispositif client (120) et du matériel à mémoire (114) des hôtes de mémoire (110) d'une abstraction de stockage (200) d'un système distribué unilatéral (140), la mappe (300) de niveaux de mémoire mappant des blocs de données (B), ($B_1$ - $B_N$) en un niveau de mémoire de requête ($l_q$) correspondant associé à un niveau de mémoire le plus bas parmi les niveaux de mémoire ($l_i$) auquel le bloc de données (B) correspondant de la requête exécutée (q) est stocké, chaque niveau de mémoire ($l_i$) comprenant une mémoire physique, RAMi, et une mémoire virtuelle, *Shelter*$_i$, la mémoire virtuelle, Shelter$_1$, d'un niveau de mémoire le plus bas ($l_l$) résidant sur le matériel à mémoire (122) du dispositif client (120), la mémoire physique restante, RAMi, et une mémoire virtuelle, $Shelter_i$, résidant sur le matériel à mémoire (114) des hôtes de mémoire (110) du système distribué unilatéral (140) en communication avec le matériel (124) de traitement de données, chacun des hôtes de mémoire (110) comprenant un contrôleur d'interface réseau, en abrégé NIC (116), compatible avec un accès mémoire direct distant, en abrégé RDMA ;

le fait de déterminer si le niveau de mémoire de requête ($l_q$) est le niveau de mémoire le plus bas ($l_l$), ($l_q = l_l$) ;

lorsque le niveau de mémoire de requête ($l_q$) est le niveau de mémoire le plus bas ($l_l$), ($l_q = l_l$) :

le fait de récupérer le bloc de données (B) dans la mémoire virtuelle, $Shelter_1$, du niveau de mémoire le plus bas ($l_l$) ; et pour chaque niveau de mémoire ($l_j$) supérieur au niveau de mémoire le plus bas ($l_l$) et la mémoire physique, $RAM_1$, au niveau de mémoire le plus bas ($l_l$) :

le fait d'envoyer, par le matériel (124) de traitement de données, une ou plusieurs fausses requêtes (404) à un NIC (116) compatible RDMA respectif correspondant au niveau de mémoire ($l_j$) respectif ; le fait de récupérer, depuis le niveau de mémoire respectif ($l_j$), ($l_l$), un bloc de données fictif ($D_j$) correspondant ; et le fait de rejeter le bloc de données fictif ($D_j$) récupéré ; et

lorsque le niveau de mémoire ($l_q$) n'est pas le niveau de mémoire le plus bas ($l_l$), ($l_q < l_l$) :

le fait de récupérer le bloc de données (B) depuis le niveau de mémoire de requête ($l_q$) ; le fait de stocker le bloc de données récupéré (B) dans la mémoire virtuelle, $Shelter_1$, du niveau de mémoire le plus bas ($l_l$) ; pour chaque niveau de mémoire ($l_j$) autre que le niveau de mémoire de requête ($l_q$),

le fait de récupérer, depuis le niveau de mémoire respectif ($l_j$), le bloc de données fictif ($D_j$) correspondant via un NIC (116) compatible RDMA respectif correspondant au niveau de mémoire ($l_j$)

respectif ; et le fait de rejeter le bloc de données fictif ($D_j$) récupéré.

9. Le dispositif client (120) selon la revendication 8, dans lequel, pour chaque niveau de mémoire ($l_i$), la mémoire physique, RAMi, a une première taille définie pour contenir $N_i$ blocs de données (B) et la mémoire virtuelle ($Shelter_i$,) a une deuxième taille définie pour contenir $S_i$ blocs de données (B), $S_i$ étant égal à $N_i/c$ et c étant une constante supérieure à un.

10. Le dispositif client (120) selon la revendication 8 ou la revendication 9, dans lequel le bloc de données fictif ($D_j$) correspondant du niveau de mémoire respectif ($l_j$) comprend une permutation ($\pi_j$) d'un pointeur ($dCnt_j$) vers un bloc de données respectif ($N_j$) au niveau de mémoire ($l_j$) respectif ; et dans lequel les opérations comprennent en outre le fait d'incrémenter le pointeur ($dCnt_j$).

11. Le dispositif client (120) selon l'une quelconque des revendications 8 à 10, dans lequel les opérations comprennent en outre, lorsque le niveau de mémoire ($l_q$) n'est pas le niveau de mémoire le plus bas ($l_l$), le fait de mettre à jour la mappe de niveaux (300) pour indiquer que le bloc de données récupéré est stocké dans la mémoire virtuelle, $Shelter_1$, du niveau de mémoire le plus bas ($l_l$).

12. Le dispositif client (120) selon l'une quelconque des revendications 8 à 11, dans lequel le système distribué (140) est configuré pour initialiser au moins un bloc de données ($B_i$) de la mémoire virtuelle, $Shelter_i$, correspondante d'au moins un niveau de mémoire ($l_i$) en tant que bloc de données fictif ($D_i$) respectif.

13. Le dispositif client (120) selon l'une quelconque des revendications 8 à 12, dans lequel le bloc de données fictif ($D_i$) respectif comprend une permutation d'une taille du bloc de données ($N_i$) correspondant, un index du bloc de données ($N_i$) correspondant, ou un numéro de niveau de mémoire du niveau de mémoire ($l_i$) correspondant.

14. Le dispositif client (120) selon l'une quelconque des revendications 8 à 13, dans lequel les opérations comprennent en outre

le fait de réarranger de façon indifférente la mémoire virtuelle, $Shelter_i$, correspondante de chaque niveau de mémoire ($l_i$) ; et le fait de réarranger de façon indifférente la mémoire virtuelle, Shelten, du niveau de mémoire le plus bas ($l_l$) avec la mémoire virtuelle, $Shelter_{1-1}$ d'un niveau de mémoire suivant ($l_i$) supérieur au niveau de mémoire le plus bas ($l_l$).

**15.** Le dispositif client (120) selon la revendication 14, dans lequel le réarrangement de façon indifférente comprend :

le fait de sélectionner une permutation aléatoire pour les blocs de données ($B$) provenant de la mémoire virtuelle, Shelten, $Shelter_{1-1}$ ;

le fait de décrypter chacun des blocs de données ($B$) provenant de la mémoire virtuelle, $Shelter_1$, $Shelter_{1-1}$ ;

le fait de recrypter chacun des blocs de données ($B$) provenant de la mémoire virtuelle, Shelter, $Shelter_{1-1}$ ; et

le fait de réarranger les blocs de données recryptés ($B$) en utilisant la permutation aléatoire sur les blocs de données ($B$) recryptés.

**FIG. 1A**

FIG. 1B

**Memory Levels ($I_i$)**

Level 1
($i=1$)
($l-1$)

$N_1$ = 16 data blocks (B)

Shelter$_0$, RAM$_1$ — 210

B,B$_1$  B,B$_2$    B,B$_N$

$S_1$ = $N_1 / c$ = 8 data blocks (B)

Shelter$_1$ — 220

200

Level 2
($i=2$)
($l$)

$N_2$ = $S_1$ = 8 data blocks (B)

RAM$_2$ — 210

$S_2$ = $N_2 / c$ = 4 data blocks (B)

Shelter$_2$ — 122,220

## FIG. 2

**Memory-Level Map <u>300</u>**

**Data Block** | **Query Memory Level ($I_q$)**

$B_1$ ------------------------- Level 1 ($Shelter_1$)

$B_2$ ------------------------- Level 2 ($Shelter_2$)

$B_3$ ------------------------- Level 0 ($Shelter_0$)

$B_4$ ------------------------- Level 2 ($Shelter_2$)

·
·
·
·
·
·
·
·
·
·

$B_N$ ------------------------- Level 1 ($Shelter_1$)

# FIG. 3

FIG. 4A

FIG. 4B

500

Init($N, c, l$)

1. For all $i = 0, \ldots, l - 1$, initialize $c_i = 0$, which represents the number of queries since the last shuffle of $M_i$. Therefore, each $c_i$ will be modulus $\frac{N}{c}$.

2. For all $i = 0, \ldots, l - 1$, initialize $\mathrm{dCnt}_i = 0$, which represents the index of the next dummy block that can be used in Shelter$_i$.

3. For all $i = 1, \ldots, N$, initialize $l_i = 1$, where $l_i$ is the entry of memory location $i$ in the level map.

4. For all $i = 0, \ldots, l - 1$, randomly generate $\pi_i$, representing how the data is currently permuted at Shelter$_i$. Note, that $\pi_i$ is a permutation over $N_i$ real blocks and $S_i$ dummy blocks.

5. For all $i = 1, \ldots, N_1$, initialize Shelter$_0[\pi_1(i)]$ to be a real empty data block.

6. For all $i = N_1 + 1, \ldots, N_1 + S_1$, initialize Shelter$_0[\pi_1(i)]$ to be a dummy block.

7. For all $i = 1, \ldots, l - 1$, and for all $j = 1, \ldots, N_i + S_i$, initialize Shelter$_i[j]$ to be a dummy block.

8. Initialize Shelter$_l = \emptyset$.

# FIG. 5

600

Query($q$)

1. Retrieve $(l_q, p_q)$ from the level map on the client.

2. If $l_q = l$,

    (a) Retrieve $\text{Shelter}_l[q]$ and update $\text{Shelter}_l[q]$ if necessary.

    (b) For all $i = 0, \ldots, l - 1$, query $\pi_i(\text{dCnt}_i)$ in $\text{Shelter}_i$.

    (c) For all $i = 0, \ldots, l - 1$, increment $\text{dCnt}_i$ by one.

3. If $l_q \neq l$,

    (a) For all $i = 0, \ldots, l_q - 1, l_q + 1, \ldots, l - 1$, query $\text{Shelter}_i$ for $\pi_i(\text{dCnt}_i)$.

    (b) Query $\pi_{l_q}(p_q)$ from $\text{Shelter}_{l_q}$.

    (c) For all $i = 0, \ldots, l_q - 1, l_q + 1, \ldots, l - 1$, increment $\text{dCnt}_i$ by one.

    (d) Place the retrieve data block from $\text{Shelter}_{l_q}$ into location $q$ in $\text{Shelter}_l$. If the entry already exists, overwrite the old version.

    (e) Update the position map such that $l_q = l, p_q = q$.

4. For all $i = 0, \ldots, l - 1$, increment $c_i$ by one.

5. Pick the smallest $i$ such that $c_i = 0$. If none exists, terminate.

6. For each $q$ such that $l_q \in \{i, \ldots, l\}$, update $l_q = i$.

7. For all $j = l - 1, \ldots, i$, perform $\text{ObliviousShuffle}(\text{Shelter}_j, \text{Shelter}_{j+1})$.

# FIG. 6

700

Executing, By Data Processing Hardware, An Instruction To Execute A Query *(q)* For A Data Block *(B)* 702

Obtaining, By The Data Processing Hardware, A Query Memory Level *(I$_q$)* Corresponding To The Data Block *(B)* From A Memory-Level Map, The Memory-Level Map Mapping Memory Levels *(I$_i$)* Of Memory, Each Memory Level *(I$_i$)* Comprising Physical Memory *(RAM$_i$)* And Virtual Memory *(Shelter$_i$)*, The Virtual Memory *(Shelter$_i$)* Or A Lowest Memory Level *(L$_l$)* Residing On A Client Device, The Remaining Physical Memory *(RAM$_i$)* And Virtual Memory *(Shelter$_i$)* Residing On Memory Hardware Of A Distributed System In Communication With The Data Processing Hardware 704

Determining, By The Data Processing Hardware, Whether The Query Memory Level *(I$_q$)* Is The Lowest Memory Level *(I$_l$)*, $L_q=I_l$) 706

When The Query Memory Level (I$_q$) Is The Lowest Memory Level (I$_l$), $L_q=I_l$), Retrieving, By The Data Processing Hardware, The Data Block *(B)* From The Virtual Memory *(Shelter$_i$)* Of The Lowest Memory Level *(I$_l$)* 708

A

FIG. 7A

700

(A)

For Each Memory Level $(l_j)$ Greater Than The Lowest Memory Level $(l_l)$ And The Physical Memory $(RAM_l)$ At The Lowest Memory Level $(l_l)$:

Retrieving, By The Data Processing Hardware, A Corresponding Dummy Data Block $(D_j)$ From The Respective Memory Level $(l_j)$, $(l_l)$     710

Discarding, By The Data Processing Hardware, The Retrieved Dummy Data Block $(D_j)$     712

When The Memory Level $(l_q)$ Is Not The Lowest Memory Level $(l_l)$, $(l_q < l_j)$:

Retrieving, By The Data Processing Hardware, The Data Block $(B)$ From The Query Memory Level $(l_q)$     714

Storing, The Retrieved Data Block $(B)$ In The Virtual Memory $(Shelter_l)$ Of The Lowest Memory Level $(l_l)$     716

For Each Memory Level $(l_j)$ Other Than The Query Memory Level $(l_q)$, Retrieving, By The Data Processing Hardware, The Corresponding Dummy Data Block $(D_j)$ From The Respective Memory Level $(l_j)$     718

Discarding, By The Data Processing Hardware, The Retrieved Dummy Data Block $(D_j)$     620

FIG. 7B

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140007250 A1
- US 62490804
- US 9164702 B